(19) Europäisches Patentamt / European Patent Office / Office européen des brevets

(11) EP 4 422 867 B1

(12) EUROPEAN PATENT SPECIFICATION

(45) Date of publication and mention of the grant of the patent:
**19.11.2025 Bulletin 2025/47**

(21) Application number: **22802069.9**

(22) Date of filing: **10.10.2022**

(51) International Patent Classification (IPC):
***C08L 33/06** (2006.01)* ***C08L 33/12** (2006.01)*
***B33Y 70/10** (2020.01)* *C08L 23/06 (2006.01)*
*C08L 23/12 (2006.01)*

(52) Cooperative Patent Classification (CPC):
(C-Sets available)
**B33Y 70/10; C08L 23/06; C08L 23/12;**
C08L 2205/025; C08L 2205/035; C08L 2207/02;
Y02W 30/62 (Cont.)

(86) International application number:
**PCT/EP2022/078112**

(87) International publication number:
**WO 2023/072570 (04.05.2023 Gazette 2023/18)**

# (54) REINFORCED POLYPROPYLENE COMPOSITION

VERSTÄRKTE POLYPROPYLENZUSAMMENSETZUNG

COMPOSITION DE POLYPROPYLÈNE RENFORCÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.10.2021 EP 21205228**

(43) Date of publication of application:
**04.09.2024 Bulletin 2024/36**

(73) Proprietors:
- **Basell Polyolefine GmbH**
  **50389 Wesseling (DE)**
- **Albert-Ludwigs-Universität Freiburg**
  **79098 Freiburg (DE)**

(72) Inventors:
- **SCHIRMEISTER, Carl Gunther**
  **79211 Denzlingen (DE)**
- **LICHT, Erik Hans**
  **55128 Mainz (DE)**
- **HEES, Timo**
  **55116 Mainz (DE)**
- **ROHRMANN, Jürgen**
  **65779 Kelkheim (DE)**
- **KÖHLER, Rainer**
  **91257 Pegnitz (DE)**
- **MIHAN, Shahram**
  **65812 Bad Soden (DE)**
- **KESSLER, Yannic**
  **65830 Kriftel (DE)**
- **MUELHAUPT, Rolf**
  **79117 Freiburg (DE)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-03/076511**
**WO-A1-2020/169423**
**WO-A1-2021/069242**
**US-A1- 2013 253 125**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/06, C08L 23/06, C08L 23/12,**
**C08L 23/0815, C08L 53/025, C08L 51/06;**
**C08L 23/12, C08L 23/0815, C08L 23/06,**
**C08L 23/06;**
**C08L 23/12, C08L 23/0815, C08L 53/025,**
**C08L 51/06, C08L 23/06, C08L 23/06**

## Description

### FIELD OF THE INVENTION

The present disclosure relates to a polyolefin composition and to injection molded or 3D-printed articles obtained therefrom.

### BACKGROUND OF THE INVENTION

To compete with other engineered materials, polyolefins are often reinforced with inorganic fillers, such as glass fibers or minerals.

Filled polyolefins have several advantageous properties, eg. high strength and stiffness, and are widely used in many industrial field, eg. in the automotive field for the injection molding of interior and exterior parts.

Even though the presence of inorganic fillers improves mechanical properties of polyolefins, it also has negative impact on the environmental sustainability of filled materials.

The mechanical properties of mechanically recycled glass-fibers filled polyolefins deteriorate over time because the fibers are broken and shredded with each recycling step. Thus, the life cycle of inorganically filled plastic materials is shorter than that of unfilled materials and they rapidly turn into disposable wastes.

When chemical recycled, the inorganic fillers must be separated from the polyolefin matrix, thereby increasing the process complexity and reducing sustainability.

Furthermore, plastic filled with customary inorganic fillers has high density. The heavier the plastic material, the higher the vehicle mass when the material is transported. This brings about a higher fuel consumption for combustion engine vehicles or a reduced range of electrical vehicles, thereby increasing the environmental impact of the logistic of filled materials.

Self-reinforced polyolefin solutions have been developed to provide reinforced polyolefins which do not contain inorganic reinforcing agents.

Timo Hees et al., in Polymer, Volume 151, 29 August 2018, pages 47-55 disclose an all-PE self-reinforced composite obtained by compounding conventional HDPE with a bimodal reactor blend of UHMWPE (Ultra High Molecular Weight Polyethylene) and HDPE wax. The resulting trimodal self-reinforced polyethylene has improved mechanical performance.

However, past attempts to reinforce polypropylene with UHMWPE either achieved poor results because of the poor miscibility of UHMWPE with polypropylene, or were possible using unconventional and energy consuming processes.

X. Wang et al., Journal of Polymer Science, Vol. 100, 3495-3509 (2006) achieved satisfactory results in reinforcing propylene homopolymers with UHMWPE, eventually in the presence of EPDM, when the polyolefins were melt blended in a corotating four-screw extruder. Poor results were obtained using a conventional twin-screw extruder.

T. Hees et al., ACS Applied Polymer Materials, 2021, 3, 3455-3464 obtained poor results in reinforcing iPP with a reactor blend of UHMWPE and a PE wax in low amounts.

The patent application US2014/0066574A1 teaches to obtain a reinforced injection molded article by pultrusion of 60-85 wt.% of a highly flowable thermoplastic resin into 15-40 wt.% of UHMWPE fibers

The patent application WO 2020/169423 A1 discloses a composition for use in extrusion additive manufacturing comprising a multimodal PE composition, but is silent on a heterophasic polymer composition.

WO 2021/069242 A1 discloses a PP composition for extrusion manufacturing comprising a heterophasic polymer, but is silent on a multimodal polyethylene composition.

WO 03/076511 A1 teaches a heterophasic polypropylene composition, but is silent on a multimodal polyethylene composition.

US2013/253125 A1 discloses a heterophasic polymer composition comprising an elastomeric polypropylene copolymer. Also polyethylenes are described, but no reference to 3D printing is made.

In this context, there is still the need of reinforced polyolefins which have improved mechanical properties with respect to the same unreinforced polyolefins, in particular simultaneously increased tensile strength and impact resistance, low density and improved recyclability with respect to inorganically filled polyolefins.

### SUMMARY OF THE INVENTION

The present disclosure provides a polyolefin composition (I) comprising :

(A) 15-80% by weight of an heterophasic polymer composition comprising:

(a) 50-80% by weight of at least one propylene polymer selected from the group consisting of propylene homopolymers, propylene copolymers with ethylene and/or at least one alpha-olefin of formula $CH_2=CHR^1$, where $R^1$ is a linear or branched C2-C8 alkyl, the copolymer comprising up to and including 10.0% by weight, preferably from 0.05 to 8.0% by weight, based on the weight of (a), of units deriving from ethylene and/or the alpha-olefin, and mixtures thereof;
(b) 20-50% by weight of at least one copolymer of ethylene and at least one alpha-olefin of formula $CH_2=CHR^1$, where $R^1$ is a linear or branched C2-C8 alkyl, the copolymer comprising from 10 to 40% by weight, preferably from 20 to 35% by weight, based on the weight of (b), of units deriving from the alpha-olefin,

wherein the amounts of components (a) and (b) are based on the total weight of (a)+(b);
(B) 20-85% by weight of a polyethylene composition comprising:

(i) 25-85% by weight of a polyethylene component having a weight average molecular weight Mw(i), measured by Gel Permeation Chromatography, equal to or higher than 1,000,000 g/mol;
(ii) 10-65% by weight of a polyethylene component having a weight average molecular weight Mw(ii), measured by Gel Permeation Chromatography, equal to or lower than 5,000 g/mol,
wherein the polyethylene composition (B) comprises at least 70% by weight of (i)+(ii) and the amounts of (i) and (ii) are based on the total weight of the polyethylene composition (B), the total weight being 100%,

and wherein the amounts of components (A) and (B) are based on the total weight of (A)+(B).

The present disclosure also provides a process for manufacturing a shaped article comprising subjecting a flow of the molten polyolefin composition (I) to a shear rate equal to or greater than 50 $s^{-1}$.
In a further aspect the present disclosure provides the use of a polyethylene composition (B) comprising:

(i) 25-85% by weight of a polyethylene component having a weight average molecular weight Mw(i), measured by Gel Permeation Chromatography, equal to or higher than 1,000,000 g/mol;
(ii) 10-65% by weight of a polyethylene component having a weight average molecular weight Mw(ii), measured by Gel Permeation Chromatography, equal to or lower than 5,000 g/mol,
wherein the polyethylene composition (B) comprises at least 70% by weight of (i)+(ii) and the amounts of (i) and (ii) are based on the total weight of the polyethylene composition (B), the total weight being 100%,

as reinforcing masterbatch for an heterophasic polymer composition (A) comprising:

(a) 50-80% by weight of at least one propylene polymer selected from the group consisting of propylene homopolymers, propylene copolymers with ethylene and/or at least one alpha-olefin of formula $CH_2=CHR^1$, where $R^1$ is a linear or branched C2-C8 alkyl, the copolymer comprising up to and including 10% by weight, preferably from 0.05 to 8% by weight, based on the weight of (a), of units deriving from ethylene and/or the alpha-olefin, and mixtures thereof;
(b)20-50% by weight of at least one copolymer of ethylene and at least one alpha-olefin of formula $CH_2=CHR^1$, where $R^1$ is a linear or branched C2-C8 alkyl, the copolymer comprising from 10 to 40% by weight, preferably from 20 to 35% by weight, based on the weight of (b), of units deriving from the alpha-olefin,

wherein the amounts of components (a) and (b) are based on the total weight of (a)+(b).
The polyolefin composition (I) is endowed with improved mechanical properties, in particular high tensile modulus and high tensile strength in combination with high impact resistance.
The polyolefin composition (I) has also significantly reduced density compared to the heterophasic polyolefin composition (A) reinforced with conventional inorganic fillers, eg. glass fibers.
The polyolefin composition (I) can be easily converted into shaped articles using conventional extruders, like twin-screw extruders, requiring little or no modifications of customary process and equipment settings.
Furthermore, the mechanical properties of the polyolefin composition (I) does not deteriorate significantly after multiple processing, allowing for multiple recycling of the polyolefin composition (I), which results in an improved environmental sustainability of the polyolefin composition (I) with respect to polyolefin compositions containing conventional inorganic fillers.

DETAILED DESCRIPTION OF THE INVENTION

In the context of the present disclosure;

- the percentages are expressed by weight, unless otherwise specified. The total weight of a composition sums up to 100%, unless otherwise specified;
- when referred to polymers, the term "blend" refers to reactor-made blends, i.e. blends of at least two polymeric components obtained directly from a polymerization process, to mechanical blends, i.e. blends obtained by melt-mixing at least two distinct polymeric components, and to combinations of the two;
- when the term "comprising" is referred to a polymer or to a polymer composition, mixture or blend, it should be construed to mean "comprising or consisting essentially of";
- the term "consisting essentially of" means that, in addition to those components which are mandatory, other components may also be present in a polymer or in a polymer composition, mixture or blend, provided that the essential characteristics of the polymer or of the composition, mixture or blend are not materially affected by their presence. Examples of components that, when present in customary amounts, do not materially affect the characteristics of a polymer or of a polyolefin composition, mixture or blend are catalyst residues, antistatic agents, melt stabilizers, light stabilizers, antioxidants and antiacids.

In one preferred embodiment, the polyolefin composition (I) comprises 40-80% by weight, preferably 50-70% by weight, of the heterophasic polymer composition (A) and 20-60% by weight, preferably 30-50% by weight, of the polyethylene composition (B).

Preferably, the polyolefin composition (I) has at least one of, more preferably all, the following properties:

- a melt flow rate MFR(tot) measured according to the method ISO 1133-2:2011 at 230°C with a load of 2.16Kg of 0.001-5.0 g/10 min; and/or
- a density measured according to ASTM standard D792 - 08 equal to or lower than 1.00 g/cm$^3$. In one embodiment, the density is equal to or greater than 0.90 g/cm$^3$; and/or
- a tensile modulus, measured according to the method ISO 527-1:2012 on injection molded specimens, at least 100% higher than the tensile modulus of the heterophasic polymer composition (A), preferably at least 150% higher, still more preferably at least 200% higher. In one embodiment, the tensile modulus of the polyolefin composition (I) is less 500% higher than the tensile modulus of the heterophasic polymer composition (A).

In one embodiment, the polyolefin composition (I) does not comprise any inorganic reinforcing agent, such as glass fibers or mineral fillers, and/or any fiber-reinforcing agent, such as polyolefin fibers or wool.

In one embodiment, the polyolefin composition (I) comprises exclusively component (B) as reinforcing agent.

In the following the individual components of the polyolefin composition (I) are defined in more detail. Said components can be comprised in the polyolefin composition (I) in any combination.

The alpha-olefin optionally comprised in components (a) and (b) of the heterophasic polymer composition (A) is preferably independently selected from the group consisting of butene-1, hexene-1, 4-methyl-1-pentene, octene-1 and combinations thereof, preferably the alpha-olefin is butene-1.

In one embodiment, the component (a) of the heterophasic polymer composition (A) is a blend of propylene polymers.

In one embodiment, the component (a) of the heterophasic polymer composition (A) is a propylene homopolymer or blend of propylene homopolymers.

In a preferred embodiment, the component (a) of the heterophasic polymer composition (A) has at least one of, more preferably all, the following properties:

- a fraction soluble in xylene at temperature of 25°C XS(a) equal to or lower than 5% by weight, preferably equal to or lower that 3% by weight, based on the weight of (a). In one embodiment, the lower limit is 0.1 wt.%, based on the weight of (a), for each upper limit; and/or
- a melt flow rate MFR(a), measured according to the method ISO 1133-2:2011 at a temperature of 230°C, with a load of 2.16Kg, equal to or higher than 50 g/10 min., preferably ranging from 50 to 300 g/10 min..

In one embodiment, the component (a) is a propylene homopolymer or a blend of propylene homopolymers endowed with all the properties above.

The component (b) is an ethylene copolymer or a blend of ethylene copolymers.

In one embodiment, the component (b) of the heterophasic polymer composition (A) is a copolymer or a blend of copolymers of ethylene and 1-butene.

In a preferred embodiment, the component (b) of the heterophasic polymer composition (A) has at least one of, preferably all, the following properties:

- a weight average molecular weight Mw measured by GPC equal to or greater than 50,000 g/mol, preferably ranging

from 50,000 to less than 1,000,000 g/mol; and/or

- a fraction soluble in xylene at temperature of 25°C XS(b) equal to or greater than 40 wt.%, preferably equal to or greater than 65 wt.%, based on the weight of (b). In one embodiment, the upper limit of the fraction soluble in xylene at temperature of 25°C XS(b) is equal to 100 wt.% for each lower limit.

In one embodiment, the heterophasic polymer composition (A) preferably comprises:

(a) 35-70% by weight, more preferably 40-65% by weight, of at least one propylene polymer selected from the group consisting of propylene homopolymers, propylene copolymers with ethylene and/or at least one alpha-olefin of formula $CH_2$=$CHR^1$, where $R^1$ is a linear or branched C2-C8 alkyl, the copolymer comprising up to and including 10.0% by weight, preferably from 0.05 to 8.0% by weight, based on the weight of (a), of units deriving from ethylene and/or the alpha-olefin;
(b) 15-40% by weight, more preferably 20-35% by weight, of at least one copolymer of ethylene and at least one alpha-olefin of formula $CH_2$=$CHR^1$, where $R^1$ is a linear or branched C2-C8 alkyl, the copolymer comprising from 10 to 40% by weight, preferably from 20 to 35% by weight, based on the weight of (b), of units deriving from the alpha-olefin; and
(c) 5-30% by weight, preferably 7-20% by weight, of at least one copolymer of propylene with ethylene and/or at least one alpha-olefin of formula $CH_2$=$CHR^1$, where $R^1$ is a linear or branched C2-C8 alkyl, and mixtures thereof, the propylene copolymer comprising up to and including 50% by weight, preferably from 15 to 50% by weight, based on the weight of (c), of units deriving from ethylene and/or the alpha-olefin;

wherein the amounts of components (a), (b) and (c) are based on the total weight of (a)+(b)+(c).

In one preferred embodiment, the at least one propylene copolymer (c) is selected from propylene-ethylene copolymers.

The heterophasic polymer composition (A) optionally comprises up to and including 3.0% by weight, for example from 0.01 to 3.0% by weight, of at least one additive (d) selected from the group consisting of antistatic agents, anti-oxidants, light stabilizers, slipping agents, anti-acids, melt stabilizers, and combinations thereof, wherein the amount of the additive (d) is based on the total weight of the polyolefin composition comprising the further additive (d), the total weight being 100%.

The heterophasic polymer composition (A) preferably has melt flow rate MFR(A) measured according to the method ISO 1133-2:2011 at a temperature of 230°C, with a load of 2.16Kg equal to or greater than 8.0 g/10 min. In one embodiment, the MFR(A) measured according to the method ISO 1133-2:2011 at a temperature of 230°C, with a load of 2.16Kg is equal to or lower than 150 g/10min.

The heterophasic polymer composition (A) is a reactor-blend or a melt-blend or a combination thereof.

In one embodiment, the heterophasic polymer composition (A) is a reactor blend heterophasic polyolefin composition (A1) comprising:

(a) 35-70% by weight, preferably 40-65% by weight, of a propylene homopolymer;
(b) 15-40% by weight, preferably 20-35% by weight, of a copolymer of ethylene and 1-butene, the copolymer comprising from 10 to 40% by weight, preferably from 20 to 35% by weight, based on the weight of (b), of units deriving from 1-butene;
(c) 5-30% by weight, preferably 7-25% by weight, of a copolymer of propylene with ethylene comprising up to and including 50% by weight, preferably from 15 to 50% by weight, based on the weight of (c), of units deriving from ethylene; and
(d) optionally up to and including 3.0% by weight, preferably from 0.01% to 3.0% by weight of at least one further additive selected from the group consisting of antistatic agents, anti-oxidants, light stabilizers, slipping agents, anti-acids, melt stabilizers, and combinations thereof,

wherein the amounts of components (a), (b), (c) and (d) are based on the total weight of (a)+(b)+(c)+(d), the total weight being 100%.

The heterophasic polyolefin composition (A1) has at least one of, preferably all, the following properties:

- a fraction soluble in xylene at temperature of 25°C XS(A1) ranging from 30% to 50% by weight, based on the weight of (A1); and/or
- an intrinsic viscosity of the fraction soluble in xylene at 25°C XSIV(A1) ranging from 1.50 to 3.00 dl/g, preferably from 2.00 to 2.50 dl/g; and/or
- a melt flow rate MFR(A1) measured according to the method ISO 1133-2:2011 at a temperature of 230°C, with a load of 2.16Kg ranging from 5 to 20 g/10 min., preferably from 8 to 15 g/10 min.

The heterophasic polymer composition (A) is prepared by melt blending the components (a), (b) and optionally (c) and (d), or by polymerizing the relevant monomers in at least two polymerization stages, wherein the second, and each optional subsequent polymerization stage, is carried out in the presence of the polymer produced and the catalyst used in the immediately preceding polymerization stage, thereby obtaining a reactor-blend of the components (a), (b) and optionally (c), and optionally melt blending the reactor-blend thus obtained with component (d).
In one embodiment, the heterophasic polymer composition (A) is a reactor blend of components (a), (b) and optionally (c).
The monomers are polymerized in the presence of a catalyst selected from metallocene compounds, highly stereospecific Ziegler-Natta catalyst systems and combinations thereof, preferably in the presence of a highly stereospecific Ziegler-Natta catalyst system comprising:

(1) a solid catalyst component comprising a magnesium halide support on which a Ti compound having at least a Ti-halogen bond is present, and a stereoregulating internal donor;
(2) optionally, but preferably, an Al-containing cocatalyst; and
(3) optionally, but preferably, a further electron-donor compound (external donor).

The solid catalyst component (1) preferably comprises $TiCl_4$ in an amount securing the presence of from 0.5 to 10% by weight of Ti with respect to the total weight of the solid catalyst component (1).
The solid catalyst component (1) comprises at least one stereoregulating internal electron donor compound selected from mono or bidentate organic Lewis bases, preferably selected from esters, ketones, amines, amides, carbamates, carbonates, ethers, nitriles, alkoxysilanes and combinations thereof.
Preferred donors are the esters of phthalic acids such as those described in EP45977A2 and EP395083A2, in particular di-isobutyl phthalate, di-n-butyl phthalate, di-n-octyl phthalate, diphenyl phthalate, benzylbutyl phthalate and combinations thereof.
Esters of aliphatic acids can also be selected from esters of malonic acids such as those described in WO98/056830, WO98/056833, WO98/056834, esters of glutaric acids such as those disclosed in WO00/55215, and esters of succinic acids such as those disclosed WO00/63261.
Particular type of diesters are those deriving from esterification of aliphatic or aromatic diols such as those described in WO2010/078494 and USP 7,388,061.
In some embodiments, the internal donor is selected from 1,3-diethers such as those described in EP361493, EP728769 and WO02/100904.
Specific mixtures of internal donors, in particular of aliphatic or aromatic mono or dicarboxylic acid esters and 1,3-diethers as disclosed in WO07/57160 and WO2011/061134 can be used as internal donor.
Preferred magnesium halide support is magnesium dihalide.
The amount of internal donor that remains fixed on the solid catalyst component (1) is 5 to 20% by moles, with respect to the magnesium dihalide.
Preferred methods for the preparation of the solid catalyst component (1) are described in EP395083A2.
The preparation of catalyst components according to a general method is described for example in European Patent Applications US4,399,054, US4,469,648, WO98/44009A1 and EP395083A2.
In some embodiments, the catalyst system comprises an Al-containing cocatalyst (2) selected from Al-trialkyls, preferably selected from the group consisting of Al-triethyl, Al-triisobutyl and Al-tri-n-butyl. The Al/Ti weight ratio in the catalyst system is from 1 to 1000, preferably from 20 to 800.
In embodiments, the catalyst system comprises a further electron donor compound (3) (external electron donor) selected among silicon compounds, ethers, esters, amines, heterocyclic compounds, particularly 2,2,6,6-tetramethylpiperidine, and ketones.
Preferred silicon compounds are selected among methylcyclohexyldimethoxysilane (C-donor), dicyclopentyldimethoxysilane (D-donor) and mixtures thereof.
The polymerization to obtain the single components (a), (b) and optionally (c) or the sequential polymerization process to obtain the heterophasic polymer composition (A) can be carried out in continuous or in batch, either in liquid phase or in gas phase.
The liquid-phase polymerization can be either in slurry, solution or bulk (liquid monomer).
The gas-phase polymerization can be carried out in fluidized or stirred, fixed bed reactors or in a multizone circulating reactor as illustrated in EP1012195.
The reaction temperature is preferably comprised in the range from 40°C to 90°C and the polymerization pressure is from 3.3 to 4.3 MPa for a process in liquid phase and from 0.5 to 3.0 MPa for a process in the gas phase.
Polymerization processes suitable to produce the heterophasic polymer composition (A) are described in the patent applications WO03/051984 and WO03/076511.
The composition (B) is a multimodal polyethylene composition comprising an UHMWPE fraction (i) and a PE-wax

(ii).

In a preferred embodiment, the polyethylene composition (B) comprises at least 75% by weight, more preferably at least 80% by weight, of (i)+(ii), wherein the amounts of (i) and (ii) are based on the total weight of the polyethylene composition (B), the total weight being 100%.

Preferably, the polyethylene composition (B) has a melt flow rate MFR(B), measured at 190°C with a load of 2.16 Kg according to ISO 1133-2:2011, of up to and including 10 g/10 min, preferably ranging from 0.00001 to 10 g/10 min.

The polyethylene composition (B) preferably comprises:

(i) 25-85% by weight, preferably 60-75% by weight, of a polyethylene component having a weight average molecular weight Mw(i), measured by Gel Permeation Chromatography, equal to or greater than 1,000,000 g/mol;
(ii) 10-65% by weight, preferably 10-20% by weight, of a polyethylene component having a weight average molecular weight Mw(ii), measured by Gel Permeation Chromatography, equal to or lower than 5,000 g/mol, and
(iii) up to and including 100% by weight of a polyethylene component different from component (i) and from component (ii),

wherein the polyethylene composition (B) comprises at least 70% by weight, preferably at least 75% by weight, more preferably at least 80% by weight, of (i)+(ii) and the amounts of (i) and (ii) are based on the total weight of the polyethylene composition (B), the total weight being 100%.

Preferably, the polyethylene composition (B) has a value of Mw/Mn(B) equal to or greater than 300, preferably ranging from 300 to 1,500, wherein Mw and Mn are respectively the weight and the number average molecular weights of the polyethylene composition (B) measured by GPC.

The polyethylene components (i)-(iii) are independently selected from the group consisting of ethylene homopolymers, ethylene copolymers with at least one alpha-olefin of formula $CH_2=CHR^1$, where $R^1$ is a linear or branched C2-C8 alkyl, and mixtures thereof.

The alpha-olefin is preferably selected from the group consisting of butene-1, hexene-1, 4-methyl-1-pentene, octene-1 and combinations thereof.

In a preferred embodiment the polyethylene components (i)-(iii) are ethylene homopolymers.

The density measured according to the method ASTM D 792 - 08 of the polyethylene components (i) and (ii) preferably ranges from 0.900 to 0.965 g/cm$^3$, more preferably from 0.930 to 0.960 g/cm$^3$.

Preferably, the polyethylene component (i) has at least one of, preferably all, the following properties:

- the molecular weight distribution MWD(i) has a GPC peak (1) comprised in the range from 1,000,000 to 3,000,000 g/mol, preferably from 1,500,000 to 3,000,000 g/mol, wherein the MWD(i) is determined by Gel Permeation Chromatography; and/or
- a Mw/Mn(i) value of up to and including 5, preferably from 1.2 to 5, more preferably from 1.5 to 4.5, wherein Mn is the number average molecular weight measured by Gel Permeation Chromatography.

The polyethylene component (ii) preferably has at least one of, more preferably all, the following properties:

- the MWD(ii) has a GPC peak (2) comprised in the range from 500 to 1,500 g/mol, wherein the MWD(ii) is determined by Gel Permeation Chromatography; and/or
- a Mw/Mn(ii) value of up to and including 5, preferably from 1.2 to 5, more preferably from 1.5 to 4.5, wherein Mn is the number average molecular weight measured by Gel Permeation Chromatography.

More preferably, the polyethylene composition (B) is a multimodal polyethylene composition as previously defined, the MWD of which shows a GPC peak (1) comprised in the range from 1,000,000 to 3,000,000 g/mol, preferably from 1,500,000 to 3,000,000 g/mol and a GPC peak (2) comprised in the range from 500 to 1,500 g/mol.

The polyethylene components (i)-(iii) are preferably obtained by a polymerization process using single-site catalysts, as reported for instance in WO01/021668 and WO2011/089017 with reference to the UHMWPE component (i), and in EP1188762 with reference to polyethylenes having low Mw values, as for present component (ii).

The polyethylene component (iii) is preferably obtained during the polymerization process to prepare the polyethylene component (i) and/or the polyethylene component (ii).

The polyethylene component (i) is preferably prepared by polymerizing the relevant monomers with a polymerization catalyst comprising a cyclopentadienyl complex of chromium, preferably containing $\eta$5- cyclopentadienyl moieties, in particular [$\eta^5$-3,4,5-trimethyl-1-(8-quinolyl)-2 trimethylsilyl-cyclopentadienyl-chromium dichloride (CrQCp catalyst component).

The polyethylene component (ii) is preferably prepared by polymerizing the relevant monomers with a polymerization catalyst comprising a bis(imino)pyridine complex of chromium, preferably 2,6-Bis-[1-(2,6-dimethylphenylimino)ethyl] pyridine chromium (III) trichloride (CrBIP catalyst component).

Said catalyst components are preferably supported on a solid component. Preference is given to using finely divided supports which can be any organic or inorganic solid. Examples are silica gel, magnesium chloride, aluminum oxide, mesoporous materials, aluminosilicates, hydrotalcites and organic polymers such as polyethylene, polypropylene, polystyrene, polytetrafluoroethylene or polymers bearing polar functional groups, for example copolymers of ethylene and acrylic esters, acrolein or vinyl acetate. The support material used preferably has a specific surface area ranging from 10 to 1000 $m^2/g$, a pore volume ranging from 0.1 to 5 ml/g and a mean particle size of from 1 to 500 μm.

The preparation of the supported catalyst is carried out by physisorption or by means of a chemical reaction, i.e. by covalent binding of the components, with reactive groups on the surface of the support.

The catalyst component is preferably contacted with the support in a suitable solvent, giving a soluble reaction product, an adduct or a mixture.

Suitable and preferred support materials, their mode of preparation and their use for the preparation of supported catalyst are described in WO2005/103096.

The catalyst components, in particular said CrQCp and CrBIP components, generally require to be contacted with an activator, preferably selected from alumoxanes and non-alumoxane activators, in order to achieve a high polymerization productivity.

Particularly useful alumoxanes are open-chain alumoxane compounds of the general formula (1):

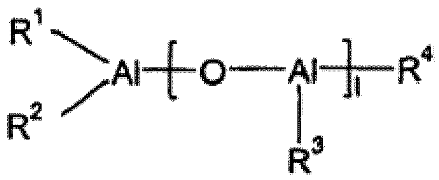

or cyclic alumoxane compounds of the general formula (2):

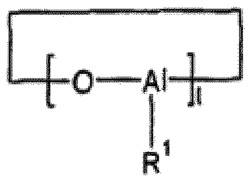

where $R^1$-$R^4$ are independently selected from C1-C6 alkyl groups; preferably $R^1$-$R^4$ are independently selected from the group consisting of methyl, ethyl, n-butyl and iso-butyl and I is an integer from 1 to 40, preferably from 4 to 25.

Preference is given to methylalumoxane (MAO).

Suitable non-alumoxane activators include alkyl aluminums, alkyl aluminum halides, anionic compounds of boron or aluminum, trialkylboron and triarylboron compounds, and the like. Examples are triethylaluminum, trimethylaluminum, tri-isobutylaluminum, diethylaluminum chloride, lithium tetrakis (pentafluorophenyl) borate, triphenylcarbenium tetrakis (pentafluorophenyl) borate, lithium tetrakis (pentafluorophenyl) aluminate, tris (pentafluorophenyl) boron and tris (pentabromophenyl) boron.

Activators are generally used in an amount within the range of 0.01 to 10,000, preferably from 1 to 5,000 moles per mole of the single-site catalyst.

They can be fed separately to the polymerization zone, supported on the previously described supports during the preparation of the single-site catalyst and/or pre-contacted with the single-site catalyst.

In a preferred embodiment, the polyethylene components (i)-(iii) are prepared in a single polymerization step by supporting the two single-site catalyst components, in particular CrQCp and CrBIP, on the same support, thereby obtaining a two-site catalyst component ensuring a relatively close spatial proximity of the catalyst centers, resulting in an intimate mixing of the polyethylene components formed on each catalyst center.

Thus, in a preferred embodiment, the polyethylene composition (B) is a reactor-blend of the polyethylene components (i)-(iii).

The previously reported relative amounts of polyethylene components (i)-(iii) are obtained by properly setting the relative amounts of the two single-site catalyst components, in particular of CrQCp and CrBIP, which will determine the amounts of the components (i)-(iii) in the polyethylene composition (B).

In a preferred embodiment, the CrBIP/CrQCp molar ratio ranges from 0.1 to 20, more preferably from 0.3 to 10, in particular from 0.5 to 8.

In a less preferred alternative, the polyethylene components (i)-(iii) are produced separately by polymerizing the

relevant monomers in the presence of the respective single-site catalysts and the polyethylene composition (B) is prepared by melt mixing the single components.

The polyethylene components (i)-(iii) are prepared by gas-phase polymerization, in particular in gas-phase fluidized-bed reactors, solution polymerization or suspension polymerization, in particular in loop reactors and stirred tank reactors. The gas-phase polymerization can be carried out in the condensed or supercondensed mode, in which part of the circulating gas is cooled to below the dew point and is recirculated as a two-phase mixture to the reactor.

The polyethylene components (i)-(iii) can also be produced in a gas-phase reactor called multizone circulating reactor (MZCR), having two interconnected polymerization zones. The polymer particles flow upwards through a first polymerization zone, denominated "riser", under fast fluidization or transport conditions, leave said riser and enter a second polymerization zone, denominated "downcomer", through which they flow in a densified form under the action of gravity. A continuous circulation of polymer is established between the riser and the downcomer. Generally, a condition of fast fluidization is established in the riser by feeding a gas mixture comprising the relevant monomers to the riser. The catalyst system is preferably fed to the reactor at any point of the riser.

In a multizone circulating reactor is possible to obtain two polymerization zones with different composition by feeding a gas/liquid stream (barrier stream) to the upper part of the downcomer. The gas/liquid stream acts as a barrier to the gas phase coming from the riser, and is capable to establish a net gas flow upward in the upper portion of the downcomer. The established flow of gas upward has the effect of preventing the gas mixture present in the riser from entering the downcomer. Such a reactor is described, for example, in WO 97/04015.

The different or identical polymerization zones can also, if desired, be connected in series so as to form a polymerization cascade, as in the Hostalen® process, for example. A parallel reactor arrangement using two or more identical or different processes is also possible. Furthermore, molar mass regulators, for example hydrogen, or customary additives, such as antistatic agents, can also be used in the polymerizations.

The polymerization temperatures are generally in the range from -20° to 115°C, and the pressure is generally in the range from 1 to 100 bar.

In the case of suspension polymerizations, the suspension medium is preferably an inert hydrocarbon such as isobutane or mixtures of hydrocarbons or else the monomers themselves. The solids content of the suspension is generally in the range from 10 to 80%. The polymerization can be carried out either batchwise, e.g. in stirring autoclaves, or continuously, e.g. in tube reactors, preferably in loop reactors.

In one embodiment, the polyethylene composition (B) comprises at least one further additive (iv) used in the relevant technical field, preferably selected from the group consisting of processing stabilizers, light stabilizers, heat stabilizers, lubricants, antioxidants, antiblocking agents, antistatic agents, pigments, dyes and mixtures thereof. The additive are comprised in in the polyethylene composition (B) in an amount of up to and including 6% by weight, preferably of from 0.1 to 1 % by weight, based on the total weight of the polyethylene composition (B) comprising the additive, the total weight being 100%.

In one preferred embodiment, the polyethylene composition (B) does not comprise any polymer other than polyethylene.

In one further embodiment, the polyethylene composition (B) consists of the polyethylene components (i) - (iii) and, optionally, the further additive (iv).

In one embodiment, the polyolefin composition (I) optionally comprises up to and including, 40% by weight, preferably 0.5-30% by weight, more preferably 1-20% by weight, of a further component (C) selected from the group consisting of:

(C1) reinforcing agents;
(C2) saturated or unsaturated styrene or alpha-methylstyrene block copolymers preferably comprising up to and including 30% by weight of polystyrene, more preferably from 10% to 30% by weight, based on the weight of (C2);
(C3) polyolefins functionalized with a compound selected from the group consisting of maleic anhydride, C1-C10 linear or branched dialkyl maleates, C1-C10 linear or branched dialkyl fumarates, itaconic anhydride, C1-C10 linear or branched itaconic acid, dialkyl esters, maleic acid, fumaric acid, itaconic acid;
(C4) an additive selected from the group consisting of pigments, dyes, extension oils, flame retardants, UV resistants, UV stabilizers, lubricants, antiblocking agents, slip agents, waxes;
(C5) combinations thereof,

wherein the amount of the further component (C) is based on the total weight of (A)+(B)+(C), the total weight being 100%.

The reinforcing agent (C1) is preferably an inorganic reinforcing agent selected from the group consisting of inorganic fibers (such as glass fibers), mineral fillers (such as talc), and combinations thereof. Preferably, the reinforcing agent (C1) is glass fibers.

The saturated or unsaturated styrene or alpha-methylstyrene block copolymer (C2) preferably comprises from 10% to 30% by weight of styrene, based on the weight of (C2). Preferably, (C2) is a styrene block copolymer selected from

the group consisting of: polystyrene-polybutadiene-polystyrene (SBS), polystyrene-poly(ethylene-butylene)-polystyrene (SEBS), polystyrene-poly(ethylene-propylene)-polystyrene (SEPS), polystyrene-polyisoprene-polystyrene (SIS), polystyrene-poly(isoprene-butadiene)-polystyrene (SIBS) and mixtures thereof. More preferably the styrene block copolymer (C2) is a polystyrene-poly(ethylene-butylene)-polystyrene (SEBS).

The styrene block copolymer (C2) preferably has at least one of, preferably all, the following properties:

- melt flow rate (MFR) measured according to ASTM D1238 (230°C, 2.16 Kg) ranging from 5 to 80 g/10min., preferably from 10 to 60 g/10min., more preferably from 10 to 30 g/10 min; and/or
- Shore A value measured according to ASTM 2240 (30 sec.) equal to or lower than 70, preferably ranging from 30 to 70, more preferably from 30 to 60.

Styrene or alpha-methylstyrene block copolymers (C2) are prepared by ionic polymerization of the relevant monomers and are commercially available under the tradename of Kraton™ marketed by Kraton Polymers.

The functionalized polyolefin (C3) is preferably selected from polyethylenes, polypropylenes and mixtures thereof, functionalized with a compound selected from the group consisting of maleic anhydride, C1-C10 linear or branched dialkyl maleates, C1-C10 linear or branched dialkyl fumarates, itaconic anhydride, C1-C10 linear or branched itaconic acid, dialkyl esters, maleic acid, fumaric acid, itaconic acid and mixtures thereof.

In a preferred embodiment, the functionalized polyolefin (C3) is a polyethylene and/or a polypropylene grafted with maleic anhydride (MAH-g-PP and/or MAH-g-PE).

Functionalized polyolefins are known in the art and can be produced by functionalization processes carried out in solution, in the solid state or preferably in the molten state, eg. by reactive extrusion of the polymer in the presence of the grafting compound and of a free radical initiator. Functionalization of polypropylene and/or polyethylene with maleic anhydride is described for instance in EP0572028A1.

Examples of functionalized polyolefins are the commercial products Amplify™ TY by The Dow Chemical Company, Exxelor™ by ExxonMobil Chemical Company, Scona® TPPP by Byk (Altana Group), Bondyram® by Polyram Group and Polybond® by Chemtura and combinations thereof.

The polyolefin composition (I) is produced by intimately mixing the components (A), (B) and optionally (C) using method and equipment known in the art, eg. by compounding components at a temperature of from 180° to 220°C.

It has been found that by shaping the polyolefin composition (I) under appropriate conditions the tensile properties of the heterophasic polymer composition (A) are improved, due to the flow-induced reinforcing effect of the polyethylene composition (B).

Accordingly, the present disclosure also refers to a process for manufacturing a shaped article comprising a step of subjecting a flow of the molten polyolefin composition (I) as described above to a shear rate equal to or greater than 50 $s^{-1}$, preferably equal to or greater than 150 $s^{-1}$.

In one embodiment, the flow of the molten polyolefin composition (I) is subjected to a strain rate equal to or greater than 3 $s^{-1}$, preferably equal to or greater than 8 $s^{-1}$.

The manufacturing process preferably comprises:

- melting the polyolefin composition (I) as described above at a temperature equal to or greater than 180°C, preferably ranging from 180°C to 220°C;
- subjecting a flow of the molten polyolefin composition (I) to a shear rate equal to or greater than 50 $s^{-1}$, preferably equal to or greater than 150 $s^{-1}$; and
- shaping and cooling the molten polyolefin composition (I).

The step of subjecting a flow of the molten polyolefin composition (I) to a shear rate equal to or greater than 50 $s^{-1}$ is preferably carried out by injection molding or by an extrusion-based processes.

In a preferred embodiment, the step of subjecting a flow of the molten polyolefin composition (I) to a shear rate equal to or greater than 50 $s^{-1}$ is carried out by injection molding and the shear rate ranges from 50 to 3,000 $s^{-1}$, preferably from 200 to 2,000 $s^{-1}$.

In one embodiment, in the injection molding process the flow of the molten polyolefin composition (I) as described above is subjected to a strain rate ranging from 3 to 200 $s^{-1}$, preferably from 8 to 120 $s^{-1}$.

The injection molding process is advantageously carried out by melt mixing the polyolefin composition (I) in conventional twin-screw extruder, preferably a conventional twin-screw co-rotating extruder.

The components of the polyolefin composition (I) are fed to the injection molding machine separately or, preferably, pre-mixed, more preferably intimately pre-mixed in the molten state. Pre-mixing in the molten state is preferably accomplished by compounding the components of the polyolefin composition (I) in a compounder of the type used in the relevant field.

The extrusion-based process is preferably an extrusion-based 3D printing process wherein the step of subjecting

a flow of the molten polyolefin composition (I) to a shear rate equal to or greater than 50 $s^{-1}$ is carried out by extrusion-based 3D printing and the shear rate ranges from 50 to 1,000 $s^{-1}$, preferably from 100 to 600 $s^{-1}$.

In one preferred embodiment, the extrusion-based 3D printing process comprises subjecting the flow of the molten polyolefin composition (I) to a strain rate ranging from 3 to 50 $s^{-1}$, preferably from 3 to 20 $s^{-1}$.

The 3D printing process is preferably a Fused Filament Fabrication (FFF) process, also known as Fused Deposition Modeling (FDM), carried out using an extrusion-based 3D printer available on the market.

The components of the polyolefin composition (I) are fed to the 3D printer separately or, preferably, pre-mixed, more preferably intimately pre-mixed in the molten state. Pre-mixing in the molten state is preferably accomplished by compounding the components of the polyolefin composition (I) in a compounder of the type used in the relevant field.

In a further aspect, the present disclosure refers to a filament for extrusion-based 3D printing, also referred to as extrusion-based additive manufacturing, comprising or consisting of a polyolefin composition (I) as disclosed above.

The shaped article obtained by the manufacturing process according to the present disclosure has outstanding mechanical properties, in combination with a significantly reduced density compared to the heterophasic polymer composition (A) reinforced solely with conventional inorganic fillers, eg. with glass fibers.

In a further aspect, the present disclosure refers to the use of the polyethylene composition (B) as described above as reinforcing masterbatch for the heterophasic polymer composition (A) as described above.

The method of using the polyolefin composition (B) to reinforce the heterophasic polymer composition (A) comprises:

- adding 20-85% by weight, preferably 20-60% by weigh, more preferably 30-50% by weight of the polyethylene composition (B) to 15-80% by weight, preferably 40-80% by weight, more preferably 50-70% by weight of the heterophasic polymer composition (A), thereby obtaining a polyolefin composition (I), wherein the amounts of (A) and (B) are based on the total weight of (A)+(B);
- melting the polyolefin composition (I) preferably at a temperature equal to or greater than 180°C and subjecting a flow of the molten polyolefin composition (I) to a shear rate equal to or greater than 50 $s^{-1}$, preferably equal to or greater than 150 $s^{-1}$; and
- shaping and cooling the molten polyolefin composition (I).

In the method above, the step of cooling the molten polyolefin composition preferably comprises shaping the polyolefin composition by an extrusion-based process or by injection molding. More preferably the extrusion-based process is 3D printing.

The features describing the subject matter of the present disclosure are not inextricably linked to each other. As a consequence, a certain level of preference of one feature does not necessarily involve the same level of preference of the remaining features of the same or different components. It is intended in the present disclosure that any preferred range of features of components (A) and (B) from which the polyolefin composition (I) is obtained can be combined independently from the level of preference, and that components (A) and (B) can be combined with any possible additional component, and its features, described in the present disclosure.

## EXAMPLES

The following examples are illustrative only, and are not intended to limit the scope of the disclosure in any manner whatsoever.

CHARACTERIZATION METHODS

The following methods are used to determine the properties indicated in the description, claims and examples.

**Melt Flow Rate:** determined according to the method ISO 1133-2:2011, at a temperature of 230°C or of 190°C depending on the polymer and with a load of 2.16Kg. The melt flow rate of a composition (MFR(tot)) is related to the melt flow rates of the components by the formula:

$$\log MFR(tot) = \sum_i w(i) logMFR(i)$$

wherein

w(i) is the weight fraction of component i in the composition and MFR(i) is the melt flow rate of the component i.

Density: measured according to the method ASTM D 792 - 08.

**Solubility in xylene at** 25°C: 2.5 g of polymer sample and 250 ml of xylene are introduced in a glass flask

equipped with a refrigerator and a magnetic stirrer. The temperature is raised in 30 minutes up to 135°C. The obtained clear solution is kept under reflux and stirring for further 30 minutes. The solution is cooled in two stages. In the first stage, the temperature is lowered to 100°C in air for 10 to 15 minute under stirring. In the second stage, the flask is transferred to a thermostatically controlled water bath at 25°C for 30 minutes. The temperature is lowered to 25°C without stirring during the first 20 minutes and maintained at 25°C with stirring for the last 10 minutes. The formed solid is filtered on quick filtering paper (eg. Whatman filtering paper grade 4 or 541). 100 ml of the filtered solution (S1) is poured in a previously weighed aluminum container, which is heated to 140°C on a heating plate under nitrogen flow, to remove the solvent by evaporation. The container is then kept on an oven at 80°C under vacuum until constant weight is reached. The amount of polymer soluble in xylene at 25°C is then calculated. The xylene soluble fraction of a composition (XS(tot)) is related to the xylene soluble fraction of the components by the following formula:

$$XS(tot) = \sum_i w(i)XS(i)$$

wherein w(i) is the weight fraction of component *i* in the composition, and XS(i) is the xylene soluble fraction of the component *i.*

**C2 and C4 content in polymers containing C3, C2 and C4:** $^{13}$C NMR spectra are acquired on a Bruker AV-600 spectrometer equipped with cryoprobe, operating at 160.91 MHz in the Fourier transform mode at 120°C. The peak of the $S_{\delta\delta}$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) is used as an internal reference at 29.9 ppm.

About 30 mg of sample are dissolved in 0.5 ml of 1,1,2,2-tetrachloroethane-d2 at 120 °C added with 0.1 mg/ml of Irganox 1010 (AO1010) as antioxidant. Each spectrum is acquired with a 90° pulse, and 15 seconds of delay between pulses and CPD to remove 1H-13C coupling. 512 transients are stored in 65K data points using a spectral window of 9000 Hz. Triad distribution is made using the following equations (possible overlaps with peaks originating from AO1010 are taken into account):

$PPP = 100\ I_{19}/\Sigma$ $\quad PPE = 100\ I_{13}/\Sigma$ $\quad EPE = 100\ I_{11}/\Sigma$

$BBB = 100\ I_8/\Sigma$ $\quad BBE = 100\ I_7/\Sigma$ $\quad EBE = 100\ I_3/\Sigma$

$XEX = 100\ I_{21}/\Sigma$ $\quad XEE = 100\ (I_6 + I_{10})/\Sigma$

$$EEE = 100\ (0.5\ I_{17} + 0.25\ (I_{16} + I_{15}))/\Sigma$$

wherein $\Sigma = I_{19} + I_{13} + I_{11} + I_8 + I_7 + I_3 + I_{21} + I_6 + I_{10} + 0.5\ I_{17} + 0.25\ (I_{16} + I_{15})$, Ii are the areas of the corresponding carbons as reported in the table below and X is either propylene or butene-1.

| Number | Chemical Shift (ppm) | Carbon | Sequence |
|---|---|---|---|
| 1 | 47.1 - 45.5 | $S_{\alpha\alpha}$ | PP |
| 2 | 40.2 - 39.1 | $S_{\alpha\alpha}$ | BB |
| 3 | 39.6 | $T_{\delta\delta}$ | EBE |
| 4 | 39.1 | $S_{\alpha\alpha}$ | BB |
| 5 | 38.2 - 37.6 | $S_{\alpha\gamma}$ | PPE |
| 6 | 37.6 - 37.2 | $S_{\alpha\delta}$ | PEE |
| 7 | 37.3 - 37.0 | $T_{\beta\delta}$ | BBE |
| 8 | 35.3 - 34.9 | $T_{\beta\beta}$ | BBB |
| 9 | 34.9 - 34.3 | $S_{\alpha\gamma}$ | BBE |
| 10 | 34.3 - 34.0 | $S_{\alpha\delta}$ | BEE |
| 11 | 33.3 - 33.2 | $T_{\delta\delta}$ | EPE |
| 12 | 30.9 | $S_{\gamma\gamma}$ | BEEB |
| 13 | 30.9 - 30.8 | $T_{\beta\delta}$ | PPE |

(continued)

| Number | Chemical Shift (ppm) | Carbon | Sequence |
|---|---|---|---|
| 14 | 30.8 - 30.6 | $S_{\gamma\gamma}$ | PEEP |
| 15 | 30.5 - 30.4 | $S_{\gamma\delta}$ | BEEE |
| 16 | 30.3 | $S_{\gamma\delta}$ | PEEE |
| 17 | 29.9 | $S_{\delta\delta}$ | EEE |
| 18 | 28.8 -28.3 | $T_{\beta\beta}$ | PPP |
| 19 | 27.6 - 26.9 | $S_{\beta\delta}$ + $2B_2$ | BE, PE, BBE |
| 20 | 26.7 | $2B_2$ | EBE |
| 21 | 24.8 - 24.1 | $S_{\beta\beta}$ | XEX |
| 22 | 21.9 - 20.0 | $CH_3$ | P |
| 23 | 11.3- 10.8 | $CH_3$ | B |

The molar content of ethylene, propylene and butene-1 is calculated from triads using the following equations:

$$[E]mol\% = EEE + XEE + XEX$$

$$[P]mol\% = PPP + PPE + EPE$$

$$[B]mol\% = BBB + BBE + EBE$$

The molar content is converted into weight content using the molecular weights of the monomers.

**C2 and C3 in polymers containing propylene and ethylene:** $^{13}$C NMR spectra are acquired on a Bruker AV-600 spectrometer equipped with cryoprobe, operating at 160.91 MHz in the Fourier transform mode at 120 °C. The peak of the $S_{\delta\delta}$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) is used as an internal reference at 29.9 ppm. About 30mg of sample are dissolved at 120°C in 0.5ml of 1,1,2,2-tetrachloroethane-d2 added with 0.1 mg/ml of Irganox 1010 (AO1010) as antioxidant. Each spectrum is acquired with a 90° pulse, 15 seconds of delay between pulses and CPD to remove 1H-13C coupling. 512 transients are stored in 32K data points using a spectral window of 9000 Hz. The assignments of the spectra, the evaluation of triad distribution and the composition are made according to M. Kakugo, Y. Naito, K. Mizunuma and T. Miyatake, Macromolecules, 1982, 15, 4, 1150-1152 using the following equations (possible overlaps with peaks originating from AO1010 are taken into account):

$PPP = 100\ T_{\beta\beta}/S$    $PPE = 100\ T_{\beta\beta}/S$    $EPE = 100\ T_{\beta\beta}/S$

$PEP = 100\ S_{\beta\beta}/S$    $PEE= 100\ S_{\beta\delta}/S$    $EEE = 100\ (0.25\ S_{\gamma\delta}+0.5\ S_{\delta\delta})/S$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar content of ethylene and propylene is calculated from triads using the following equations:

$$[E]mol = EEE + PEE + PEP$$

$$[P]mol = PPP + PPE + EPE$$

The molar content is converted into weight content using the molecular weights of the monomers.

**Molecular weight properties:** the average molecular weights Mw and Mn, and the molecular weight distributions are determined by Gel Permeation Chromatography (GPC) on a PL-220 high temperature gel permeation

chromatographer (HT-GPC Agilent) equipped with three PLGel Olexis columns and a triple-detection system (differential refractive index detector, differential viscometer 210 R(Viskotek), low-angle light scattering). The columns are calibrated using 12 monodisperse polystyrene standards (Agilent Technologies) with narrow molecular weight distribution, in the range from 580 g/mol to 11,600,000 g/mol. The calibration curve was adapted to polyethylene by means of the universal calibration method (Grubisic Z., Rempp P and Benoit H., J. Polymer Sci., 5, 753 (1967)). The Mark-Houwing parameters used for polystyrene kPS= 0.000121 dl/g, $\alpha$PS=0.706 and for polyethylene kPE= 0.000406 dl/g, $\alpha$PE=0.725, valid in TCB at 135°C. Data recording, calibration and calculation was carried out using NTGPC_Control_V6.02.03 and NTGPC_V6.4.24 (hs GmbH, Hauptstrasse 36, D-55437 Ober-Hilbersheim, Germany) respectively. Sample measurements were operated at 160°C in 1,2,4-trichlorobenzene (stabilized with 0.2 wt.-% 2,6-di-tert-butyl-(4-methylphenol, BHT)) at a flow rate of 1.0 mL/min, injection volume of 500$\mu$L and polymer concentration from 0.01% to 0.05% w/w.

**Injection molding of the test specimens**: the tensile and impact test specimens are prepared by injection molding the compositions with a DSM Xplore Micro Compounder 5cc equipped with the injection molding system DSM Xplore 10cc at 220°C, 0.8 MPa and 8 sec. of holding pressure. Mold temperature of 60°C.

**Compression molding**: Plates 110 x 80 x 2 and 4 mm were obtained with a compression molding system Collin 200P operated at 200°C, 0.8 MPa with a holding time of 20 min. Tensile test specimens of ISO 527-2:2012, Type 5A geometry were cut from plates 2mm-thick plates. Impact test specimens of ISO 179-1/1eA were cut from 4mm-thick plates.

**Tensile properties at break**: the tensile modulus and the tensile strength are measured according to the method ISO 527-1:2012, with a tensile test machine ZWICK Z005, makroXtens extensiometer (load cell 2.5 kN). Six test specimens of ISO 527-2:2012, Type 5A geometry were tested for each composition, with a pulling speed of 50 mm/min. The data were evaluated with the software TESTXPERT II V3.31. The mean value of the six measurements is taken as the value of the tested property.

**Impact test**: the Charpy impact strength is measured on test specimens ISO 179-1/1eA, according to the method ISO 179-1:2010 (notched impact at 23°C) with an impact test machine Zwick 5102.100/00 pendulum impact tester. Five test specimens were tested for each composition. All the specimens were impacted after determination of the cross sectional area at the notch. The characteristics of the impact test were determined from the dissipated energy. The mean value of five measurements is taken as the value of the impact test resistance.

**Shear rate**: the shear rate $\dot{\gamma}$ applied to the polymer melt during extrusion is calculated by the following formula:

$$\dot{\gamma} = \frac{4 \cdot \dot{V}}{\pi \cdot R_L^3}$$

wherein $R_L$ indicates the radius of the die or nozzle (unit: mm) and V is the volumetric flow (unit: $mm^3/s$) of the polymer. The volumetric flow V was measured for the specific combination of 3D printer, nozzle diameter, temperature, and printing speed (i.e. extrusion speed). For that purpose, the polymer throughput m (unit: g/s) was measured gravimetrically and divided by the polymer melt density $\rho$ (unit: $g/mm^3$) according to the following equation: V= $\dot{m}/\rho$.

**Strain rate**: the strain rate $\dot{\varepsilon}$ applied to the polymer melt during extrusion is calculated by the following formula:

$$\dot{\varepsilon} = \frac{\dot{V}}{\pi \cdot L}\left(\frac{1}{R_L^2} - \frac{1}{R_0^2}\right)$$

wherein V is the volumetric flow (unit: $mm^3/s$) of the polymer, L indicates the length of the convergent zone of the die or nozzle (unit: mm), $R_L$ indicates the radius of the die or nozzle at the outlet of the convergent zone (unit: mm) and $R_0$ indicates the radius of the die or nozzle at the inlet of the convergent zone (unit: mm). The volumetric flow $\dot{V}$ was measured for the specific combination of 3D printer, nozzle diameter, temperature, and printing speed (i.e. extrusion speed). For that purpose, the polymer throughput $\dot{m}$ (unit: g/s) was measured gravimetrically and divided by the polymer melt density $\rho$ (unit: $g/mm^3$) according to the following equation: $\dot{V}$= $\dot{m}/\rho$

**RAW MATERIALS:**

HECO-1 - an heterophasic polymer comprising (based on the total weight of (a)+(b)+(c)):

(a) 56.5 wt.% of a propylene homopolymer having a xylene soluble fraction XS(a) of 3 wt.%, based on the weight of (a), and a MFR(a) of 70 g/10 min. (ISO 1133-2:2011, 230°C/ 2.16Kg);
(b) 23.0 wt.% of a copolymer of ethylene and butene-1, containing 27.4 wt.% of units deriving from butene-1, based on the weight of (b);
(c) 20.5 wt.% of a propylene-ethylene copolymer containing 41.5 wt.% of ethylene-deriving units, based on the weight

of (c).

The HECO-1 is a reactor blend of components (a), (b) and (c) obtained as described in examples 1-3 of the patent application WO03/076511A1 having the following properties:

- a fraction soluble in xylene at temperature of 25°C XS(HECO-1) of 35.2 wt.%;
- an intrinsic viscosity of the fraction soluble in xylene at 25°C XSIV(HECO-1) of 2.26 dl/g;
- a melt flow rate MFR(HECO-1) measured according to the method ISO 1133 at a temperature of 230°C, with a load of 2.16Kg, of 12.5 g/10 min; and
- a total ethylene content of 25.2 wt.% and a total butene-1 content of 6.3 wt.%, based on the weight of (a)+(b)+(c).

The amounts of (a), (b) and (c) correspond to the splits of the reactors; the amount of ethylene in component b) and in component c) and the amount of butene-1 in component (c) are calculated from the total amounts of ethylene C2(tot) and butene-1 C4(tot) measured on the HECO-1 using the following formulas:

$$C2(tot) = w(b)C2(b) + w(c)C2(c)$$

$$C4(tot) = w(b)C4(b)$$

$$C2(b) = 100 - w(b)C4(b)$$

wherein w(b) and w(c) are the weight fractions of components (b) and (c) in HECO-1, C2(b) and C2(c) are the amounts of ethylene in components (b) and (c) and C4(b) the amount of butene-1 in component (b).

Component B: the polyethylene composition was prepared as described in the patent application WO2020/169423A1 for composition II-2.

2,6-Bis-[1-(2,6-dimethylphenylimino)ethyl] pyridine chromium (III) trichloride (CrBIP) was synthesized according to Esteruelas MA, et al. Organometallics 2003; 22(3):395-406. [$\eta^5$-3,4,5-trimethyl-1-(8-quinolyl)-2 trimethylsilylcyclopentadienyl-chromium dichloride (CrQCp) was synthesized according to: Enders et al. Organometallics 2004; 23(16):3832-9, and Fernández et al. Organometallics 2007; 26(18):4402-12.

Preparation of the mixed catalyst system

The mesoporous silica catalyst support (Sylopol XPO2107 of Grace) exhibiting a pore volume of 1.5 ml/g and specific surface of 400 $m^2$ $g^{-1}$, was dried in a Schlenk-tube in high-vacuum ($10^{-3}$ bar) at 160 °C for 14 h. 20 mL of toluene were added and the suspension was sonicated for 10 min. After adding of the calculated amount of MAO (Al : Cr = 300 : 1), the mixture was stirred for 30 min and sonicated for 5 min. After sedimentation, the MAO-treated catalyst support was washed with dry toluene by removal and exchange of the supernatant. CrBIP was dissolved in toluene (0.2 mg $mL^{-1}$), pretreated with trimethylaluminum (TMA, 10 equiv.) and added by syringe. After stirring for 5 min, CrQCp in toluene (0.2 mg $mL^{-1}$) was also added and the mixture was stirred again for 5 min. The CrBIP/CrQCp molar ratio was 3.0. After sedimentation, the activated catalyst was collected in n-heptane (20 mL), transferred into the reactor and the polymerization was started. Ethylene polymerization was carried out in a 2.6 L steel reactor (HITEC ZANG) equipped with a mechanical stirrer, thermostat and a software interface. Therefore, the reactor was heated in high-vacuum at 90°C for 2 h, filled with n-heptane (580 mL) and tri-isobutylaluminum (TiBAl, 3 mL, 1 M in *n*-hexane) and was saturated with ethylene (5 bar). After transferring the prepared catalyst into the reactor, the polymerization was proceeded at 40 °C, an ethylene pressure of 5 bar and stirring speed of 200 rpm for 120 min. The polymer was stabilized with BHT (2,6-Di-tert-butyl-4-methylphenol) in methanol, filtered and dried under reduced pressure at 60°C to constant weight.

The properties of the polyethylene composition are reported in Table 1.

Table 1

| Comp. | | Mw | GPC peak | Mw/Mn | Mw/Mn of (B) |
|---|---|---|---|---|---|
| | wt.% | g/mol | g/mol | | |

(continued)

| Comp. | | Mw | GPC peak | Mw/Mn | Mw/Mn of (B) |
|---|---|---|---|---|---|
| (i) | 63 | 2,000,000 | 1,200,000 | 4 | >500 |
| (ii) | 17 | 1,000 | 800 | 4 | |
| (iii) | 20 | - | - | - | |

HECO-2 (Comparative) - an heterophasic polyolefin composition comprising:

(a) 60 wt.% of propylene homopolymers;
(b) 40 wt.% of a propylene-ethylene copolymer containing 68 wt.% of ethylene, based on the weight of (b).

The HECO-2 is a reactor-blend of components (a) and (b) obtained as described in examples 1-2 of the patent application WO2005/014715 and having the following properties:

- a fraction soluble in xylene at temperature of 25°C XS(HECO-2) of 31.2 wt.%;
- an intrinsic viscosity of the fraction soluble in xylene at 25°C XSIV(HECO-2) of 2.29 dl/g; and
- a melt flow rate MFR(HECO-1) measured according to the method ISO 1133 at a temperature of 230°C, with a load of 2.16Kg of 11.3 g/10 min.

The amount of ethylene C2(b) in component (b) is calculated from the total amount of ethylene C2(tot) measured on the HECO-2 using the following formula:

$$C2(tot) = w(b)C2(b)$$

wherein w(b) is the weight fraction of component (b) in HECO-2, C2(b) and C2(b) is the amount of ethylene in component (b).

*Metocene* MF650Y - a propylene homopolymer supplied by LyondellBasell with a very narrow molecular weight distribution and MFR (ISO 1133, 230°C/2.16 Kg) of 1800 g/10 min.

Kraton™ G1657V from Kraton Corp., a linear styrene triblock copolymer based on styrene and ethylene/butylene containing 13wt.% of polystyrene, having MFR (ASTM D1238; 230°C, 5 Kg) of 22 g/10min. and Shore A value (ASTM D2240, 10 sec.) of 47.

Engage 7467 from Dow, an ethylene-butene copolymer containing 31 wt.% of units deriving from butene-1 and having density of 0.862 g/cm$^3$ (ASTM D792) and melt index (ASTM D1238, 190°C/2.16 Kg).

Polybond 3200 - supplied by SI Group, a maleic anhydride modified polypropylene homopolymer with a maleic anhydride content ranging from 0.8 to 1.2 wt.% (ASTM D6047) and a MFR of 115 g/10 min. (ASTM D1238, 190°C/2.16 Kg).

*Moplen* HP500N - a propylene homopolymer supplied by LyondellBasell having MFR of 12 g/10 min., measured according to the method ISO 1133 at a temperature of 230°C, with a load of 2.16Kg.

GF - Glass Fibers ThermoFlow. 636 EC10 from Johns Manville (diemeter: 10μm; length: 4mm).

Additive pack consisted of 5.0 wt.% of Irgafos 168 (BASF) a tris(2,4-di-tert.-butylphenyl)phosphite, 7.5 wt.% Irganox 1076 (BASF) an octadecyl-3-[3,5-di-tert-butyl-4-hydroxyphenyl]propionate, 2.5 wt.% Tinuvin 622 (BASF) an oligomeric hindered amine light stabilizer, 12.5 wt.% talc, 25 wt.% polydimethylsiloxane, 2.5 wt.% magnesium oxide and 45 wt.% of *Moplen* HF501N (LyondellBasell), wherein the amounts are based on the weight of the additive pack.

**Example E1 and comparative examples CE2-CE5**

The components were melt mixed in a DSM Xplore Compounder 5cc at 200°C, 120 rpm and 90s holding time, pelletized and injection molded.

The compositions of the tested specimens and the tests results for tensile and impact properties are illustrated in table 2.

Table 2

| | | **E1** | **CE2** | **CE3** | **CE4** | **CE5** |
|---|---|---|---|---|---|---|
| HECO-1 | wt.% | 60 | 100 | 75 | - | - |
| HECO-2 | wt.% | - | - | - | 100 | 50 |

(continued)

| | | E1 | CE2 | CE3 | CE4 | CE5 |
|---|---|---|---|---|---|---|
| Comp. (B) | wt.% | 40(*) | - | - | - | 50(**) |
| GF | wt.% | - | - | 25 | - | - |
| | | | | | | |
| Tensile modulus | MPa | 1,800 | 700 | 2,290 | 1,260 | 730 |
| Tensile strength | MPa | 47.5 | 17.1 | 37.2 | 21.1 | 22.0 |
| Notched Charpy impact strength | KJ/m$^2$ | 41 | 55 | 27 | 12.9 | 6.3 |
| Density | g/cm$^2$ | 0.91 | 0.89 | 1.10 | 0.90 | 0.93 |
| the amount of UHMWPE fraction (B)(i) in the polyolefin composition is: (*) 25.2 wt.% and (**) 31.5 wt.%, based on the total weight of the composition (B). | | | | | | |

**Examples E6-E9 and comparative examples CE10 and CE11**

The components were melt mixed in a DSM Xplore Compounder 5cc at 200°C, 120 rpm and 90s holding time and pelletized. The pellets were injection molded into the test specimens. The compositions of the tested specimens and the tests results for tensile and impact properties are illustrated in table 3.

Table 3

| | | | E6 | E7 | E8 | E9 | CE10 | CE11 |
|---|---|---|---|---|---|---|---|---|
| Component (A) | HECO-1 | wt.% | 39.2 | 29.4 | 24.5 | 9.8 | 36.8 | 49 |
| | MF650Y | wt.% | 15.2 | 11.4 | 9.5 | 3.8 | 14.2 | 19 |
| | Engage 7467 | wt.% | 15.2 | 11.4 | 9.5 | 3.8 | 14.2 | 19 |
| Component (B) | | wt.% | 20.0 | 40.0 | 50.0 | 80.0 | - | - |
| GF | | wt.% | - | - | - | - | 25.0 | - |
| Component (C) | Kraton G1657V | wt.% | 5.6 | 4.2 | 3.5 | 1.4 | 5.2 | 7 |
| | Polybond 3200 | wt.% | 0.8 | 0.6 | 0.5 | 0.2 | 0.8 | 1 |
| | Additive pack | wt.% | 4.0 | 3.0 | 2.5 | 1.0 | 3.8 | 5 |
| | | | | | | | | |
| Tensile modulus | | MPa | 795 | 2,100 | 2,500 | 3,700 | 2,130 | 650 |
| Tensile strength | | MPa | 32.7 | 72.0 | 88.0 | 115.0 | 31.9 | 18.2 |
| Notched Charpy impact strength | | KJ/m$^2$ | 45.6 | 44.2 | 41.0 | 82.7 | 29.3 | 54.8 |
| Density | | g/cm$^2$ | 0.91 | 0.92 | 0.93 | 0.94 | 1.10 | 0.90 |

**Comparative examples CE12 and CE13**

The components were melt mixed in a DSM Xplore Compounder 5cc at 200°C, 120 rpm and 90s holding time and pelletized. Test specimens were obtained by compression molding of the pellets. The compositions of the tested specimens and the tests results are illustrated in tables 4 and 4a.

Table 4

| | | | CE12 | CE13 |
|---|---|---|---|---|
| Component (A) | HECO-1 | wt.% | 49 | 24.5 |
| | MF650Y | wt.% | 19 | 9.5 |
| | Engage 7467 | wt.% | 19 | 9.5 |
| Component (B) | | wt.% | - | 50.0 |
| Component (C) | Kraton G1657V | wt.% | 7 | 3.5 |
| | Polybond 3200 | wt.% | 1 | 0.5 |
| | Additive pack | wt.% | 5 | 2.5 |

Table 4a

| | | CE12 | CE13 |
|---|---|---|---|
| Tensile modulus | MPa | 400 | 600 |
| Tensile strength | MPa | 16.9 | 19.0 |
| Notched Charpy impact strength | $KJ/m^2$ | 46.0 | 32.0 |
| Density | $g/cm^2$ | 0.90 | 0.93 |

**Example E14 and comparative example CE15**

The compositions of example E8 and of comparative example CE10 were subjected to four process cycles of granulating and injection molding in a DSM Xplore Micro Compounder 5cc equipped with the injection molding system DSM Xplore 10cc at 220°C, 0.8 MPa and 8 sec. of holding pressure (mold temperature of 60°C).
The values of tensile modulus and tensile strength measured at the end of each process cycle are illustrated in table 5.

Table 5

| | Process cycles | Tensile Modulus [MPa] | Tensile Strength [MPa] |
|---|---|---|---|
| **E14 (composition E8)** | 1 | 2,500 | 88 |
| | 2 | 2,600 | 89 |
| | 3 | 2,700 | 87 |
| | 4 | 2,600 | 88 |
| | 5 | 2,600 | 89 |
| **CE15 (composition CE10)** | 1 | 2,130 | 31.9 |
| | 2 | 1,920 | 28.9 |
| | 3 | 1,830 | 25.3 |
| | 4 | 1,820 | 24.7 |
| | 5 | 1,740 | 22.8 |

**Examples E16-E18 and comparative examples CE19-CE21**

The pellets of the composition produced in example E8 and of the composition produced in example CE10 were extruded on a twin-screw extruder COLLIN TEACH-LINETM ZK 25T with a round die (3.00 mm diameter) to obtain a filament for 3D printing. The extrusion parameters are listed in table 6. The extruded filament was water cooled and rolled up on printer coils.

Table 6

| Parameter | |
|---|---|
| T $_{Zone\ 1}$ [°C] | 190 |
| T $_{Zone\ 1}$ [°C] | 190 |
| T $_{Zone\ 1}$ [°C] | 180 |
| T $_{Zone\ 1}$ [°C] | 175 |
| Revolutions [Number/min] | 20 |
| Feed Rate [kg/h] | 2.0 |
| Output [mm/s] | 60 |

The 3D printed parts were produced with an Ultimaker 2+ FFF printer using 100% infill and a nozzle of 0.8 mm diameter. The printing parameters are given in Table 7.

Table 7

| Material | |
|---|---|
| Build plate material | Scotch Tape |
| Nozzle diameter [mm] | 0.8 |
| Line width [mm] | 0.7 |
| Layer height [mm] | 0.2 |
| Nozzle temperature [°C] | 210 |
| Build plate temperature [°C] | 60 |
| Printer speed [mm/s] | 25,100, or 150 |
| Infill pattern | lines |

Specimens for tensile tests and for Charpy impact tests were prepared by 3D printing the filaments with a filling pattern orientation parallel to the longest dimension of the test specimens, corresponding to a 0° orientation relative to the pulling/impact direction.

The values of the tensile modulus and of the tensile strength measured for each printing/extrusion speed and the associated shear and strain rates to which the polymer melt is subjected in the process are illustrated in table 8.

Table 8

| | | E16 | E17 | E18 | CE19 | CE20 | CE21 |
|---|---|---|---|---|---|---|---|
| **Printing speed** | mm/s | 25 | 100 | 150 | 25 | 100 | 150 |
| **Shear rate** | 1/s | 110 | 260 | 450 | - | - | - |
| **Strain rate** | 1/s | 4.4 | 10.9 | 18.3 | - | - | - |
| **Tensile modulus** | MPa | 710 | 1,500 | 2,200 | 2,340 | 2,250 | 2,120 |
| **Tensile strength** | MPa | 20.1 | 29.2 | 79.0 | 28.9 | 28.2 | 26.6 |
| **Notched Charpy impact strength** | $kJ/m^2$ | 41 | 47 | 51 | 37 | 37 | 34 |

**Claims**

**1.** A polyolefin composition (I) comprising :

(A) 15-80% by weight of an heterophasic polymer composition comprising:

(a) 50-80% by weight of at least one propylene polymer selected from the group consisting of propylene homopolymers, propylene copolymers with ethylene and/or at least one alpha-olefin of formula $CH_2=CHR^1$, where $R^1$ is a linear or branched C2-C8 alkyl, the copolymer comprising up to and including 10.0% by weight, preferably from 0.05 to 8.0% by weight, based on the weight of (a), of units deriving from ethylene and/or the alpha-olefin, and mixtures thereof;
(b) 20-50% by weight of at least one copolymer of ethylene and at least one alpha-olefin of formula $CH_2=CHR^1$, where $R^1$ is a linear or branched C2-C8 alkyl, the copolymer comprising from 10 to 40% by weight, preferably from 20 to 35% by weight, based on the weight of (b), of units deriving from the alpha-olefin,

wherein the amounts of components (a) and (b) are based on the total weight of (a)+(b);
(B) 20-85% by weight of a polyethylene composition comprising:

(i) 25-85% by weight of a polyethylene component having a weight average molecular weight Mw(i), measured by Gel Permeation Chromatography, equal to or higher than 1,000,000 g/mol;
(ii) 10-65% by weight of a polyethylene component having a weight average molecular weight Mw(ii), measured by Gel Permeation Chromatography, equal to or lower than 5,000 g/mol,
wherein the polyethylene composition (B) comprises at least 70% by weight of (i)+(ii) and the amounts of (i) and (ii) are based on the total weight of the polyethylene composition (B), the total weight being 100%,

and wherein the amounts of components (A) and (B) are based on the total weight of (A)+(B).

**2.** The polyolefin composition (I) of claim 1, comprising 40-80% by weight, preferably 50-70% by weight, of the heterophasic polymer composition (A) and 20-60% by weight, preferably 30-50% by weight, of the polyethylene composition (B).

**3.** The polyolefin composition (I) of claim 1 or 2, wherein the component (A) is an heterophasic polymer composition comprising:

(a) 35-70% by weight, preferably 40-65% by weight, of at least one propylene polymer selected from the group consisting of propylene homopolymers, propylene copolymers with ethylene and/or at least one alpha-olefin of formula $CH_2=CHR^1$, where $R^1$ is a linear or branched C2-C8 alkyl, the copolymer comprising up to and including 10.0% by weight, preferably from 0.05 to 8.0% by weight, based on the weight of (a), of units deriving from ethylene and/or the alpha-olefin;
(b) 15-40% by weight, preferably 20-35% by weight, of at least one copolymer of ethylene and at least one alpha-olefin of formula $CH_2=CHR^1$, where $R^1$ is a linear or branched C2-C8 alkyl, the copolymer comprising from 10 to 40% by weight, preferably from 20 to 35% by weight, based on the weight of (b), of units deriving from the alpha-olefin;
(c) 5-30% by weight, preferably 7-20% by weight, of at least one copolymer of propylene with ethylene and/or at least one alpha-olefin of formula $CH_2=CHR^1$, where $R^1$ is a linear or branched C2-C8 alkyl, and mixtures thereof, the propylene copolymer comprising up to and including 50% by weight, preferably from 15 to 50% by weight, based on the weight of (c), of units deriving from ethylene and/or the alpha-olefin;

wherein the amounts of components (a), (b) and (c) are based on the total weight of (a)+(b)+(c).

**4.** The polyolefin composition (I) according to any one of claims 1-3, wherein at least one alpha-olefin comprised in the heterophasic polymer composition (A) is selected from the group consisting of butene-1, hexene-1, 4-methyl-1-pentene, octene-1 and combinations thereof, preferably is butene-1.

**5.** The polyolefin composition (I) according to any one of claims 1-4, wherein the polyethylene composition (B) comprises:

(i) 25-85% by weight, preferably 60-75% by weight of a polyethylene component having a weight average molecular weight Mw(i), measured by Gel Permeation Chromatography, equal to or higher than 1,000,000 g/mol;
(ii) 10-65% by weight, preferably 10-20% by weight of a polyethylene component having a weight average molecular weight Mw(ii), measured by Gel Permeation Chromatography, equal to or lower than 5,000 g/mol,
(iii) up to and including 100% by weight of a polyethylene component different from component (i) and from component (ii),

wherein the polyethylene composition (B) comprises at least 70% by weight, preferably at least 75% by weight, more preferably at least 80% by weight, of (i)+(ii) and the amounts of components (i) and (ii) are based on the total weight of the polyethylene composition (B), the total weight being 100%.

**6.** The polyolefin composition (I) according to any one of claims 1-5, wherein the polyethylene components comprised in the polyethylene composition (B) are ethylene homopolymers.

**7.** The polyolefin composition (I) according to any one of claims 1-6, wherein the polyethylene composition (B) has a Mw/Mn(B) value equal to or greater than 300, preferably ranging from 300 to 1,500 and the polyethylene components (i) and (ii) have a Mw/Mn independently selected from values of up to and including 5, preferably from 1.2 to 5, more preferably from 1.5 to 4.5, wherein Mw is the weight average molecular weight and Mn is the number average molecular weight measured by GPC.

**8.** The polyolefin composition (I) according to any one of claims 1-7, wherein the polyethylene composition (B) has a melt flow rate MFR(B), measured at 190°C with a load of 2.16Kg according to ISO 1133-2:2011, of up to and including 10 g/10 min., preferably ranging from 0.00001 to 10 g/10 min.

**9.** The polyolefin composition (I) according to any one of claims 1-8, further comprising up to and including 40% by weight, preferably 0.5-30% by weight, more preferably 1-20%, of a component (C) selected from the group consisting of:

(C1) reinforcing agents;
(C2) saturated or unsaturated styrene or alpha-methylstyrene block copolymers preferably comprising up to and including 30% by weight of polystyrene, more preferably from 10% to 30% by weight, based on the weight of (d1);
(C3) polyolefins functionalized with a compound selected from the group consisting of maleic anhydride, C1-C10 linear or branched dialkyl maleates, C1-C10 linear or branched dialkyl fumarates, itaconic anhydride, C1-C10 linear or branched itaconic acid, dialkyl esters, maleic acid, fumaric acid, itaconic acid;
(C4) an additive selected from the group consisting of pigments, dyes, extension oils, flame retardants, UV resistants, UV stabilizers, lubricants, antiblocking agents, slip agents, waxes;
(C5) combinations thereof,

wherein the amount of component (C) is based on the total weight of (A)+(B)+(C).

**10.** A process for manufacturing a shaped article comprising a step of subjecting a flow of the molten polyolefin composition (I) as defined in any one of claims 1-9 to a shear rate equal to or greater than 50 $s^{-1}$, preferably equal to or greater than 150 $s^{-1}$.

**11.** The process according to claim 10, wherein the step of subjecting a flow of the molten polyolefin composition (I) as defined in any one of claims 1-9 to a shear rate equal to or greater than 50 $s^{-1}$ is carried out by injection molding or by an extrusion-based processes.

**12.** The process according to claim 10 or 11, wherein the step of subjecting a flow of the molten polyolefin composition (I) as defined in any one of claims 1-9 to a shear rate equal to or greater than 50 $s^{-1}$ is carried out by injection molding and the shear rate ranges from 50 to 3,000 $s^{-1}$, preferably from 200 to 2,000 $s^{-1}$.

**13.** The process according to claim 10 or 11, wherein the step of subjecting a flow of the molten polyolefin composition (I) as defined in any one of claims 1-9 to a shear rate equal to or greater than 50 $s^{-1}$ is carried out by extrusion-based 3D printing and the shear rate ranges from 50 to 1,000 $s^{-1}$, preferably from 100 to 600 $s^{-1}$, and optionally but preferably the strain rate ranges from 3 to 50 $s^{-1}$, preferably from 3 to 20 $s^{-1}$.

**14.** An article obtained by the process as defined in any one of claims 10-13.

**15.** A filament for extrusion-based additive manufacturing comprising the polyolefin composition (I) as described in any one of claims 1-9.

**16.** Use of a polyethylene composition (B) comprising:

(i) 25-85% by weight of a polyethylene component having a weight average molecular weight Mw(i), measured by

Gel Permeation Chromatography, equal to or higher than 1,000,000 g/mol;
(ii) 10-65% by weight of a polyethylene component having a weight average molecular weight Mw(ii), measured by Gel Permeation Chromatography, equal to or lower than 5,000 g/mol,
wherein the polyethylene composition (B) comprises at least 70% by weight of (i)+(ii) and the amounts of (i) and (ii) are based on the total weight of the polyethylene composition (B), the total weight being 100%,

as reinforcing masterbatch for an heterophasic polymer composition (A) comprising:

(a) 50-80% by weight of at least one propylene polymer selected from the group consisting of propylene homopolymers, propylene copolymers with ethylene and/or at least one alpha-olefin of formula $CH_2=CHR^1$, where $R^1$ is a linear or branched C2-C8 alkyl, the copolymer comprising up to and including 10.0% by weight, preferably from 0.05 to 8.0% by weight, based on the weight of (a), of units deriving from ethylene and/or the alpha-olefin, and mixtures thereof;
(b) 20-50% by weight of at least one copolymer of ethylene and at least one alpha-olefin of formula $CH_2=CHR^1$, where $R^1$ is a linear or branched C2-C8 alkyl, the copolymer comprising from 10 to 40% by weight, preferably from 20 to 35% by weight, based on the weight of (b), of units deriving from the alpha-olefin,
wherein the amounts of components (a) and (b) are based on the total weight of (a)+(b).

## Patentansprüche

**1.** Polyolefinzusammensetzung (I), umfassend:

(A) 15 bis 80 Gew.% einer heterophasischen Polymerzusammensetzung, umfassend:

(a) 50 bis 80 Gew.% von mindestens einem Propylenpolymer ausgewählt aus der Gruppe bestehend aus Propylenhomopolymeren, Propylencopolymeren mit Ethylen und/oder mindestens einem alpha-Olefin mit der Formel $CH_2=CHR^1$, wobei $R^1$ ein lineares oder verzweigtes $C_2$-$C_8$-Alkyl ist, das Copolymer bis zu und einschließlich 10,0 Gew.%, vorzugsweise 0,05 bis 8,0 Gew.%, bezogen auf das Gewicht von (a), von Einheiten umfasst, die von Ethylen und/oder dem alpha-Olefin abgeleitet sind, sowie Mischungen davon;
(b) 20 bis 50 Gew.% von mindestens einem Copolymer von Ethylen und mindestens einem alpha-Olefin mit der Formel $CH_2=CHR^1$, wobei $R^1$ ein lineares oder verzweigtes $C_2$-$C_8$-Alkyl ist, das Copolymer 10 bis 40 Gew.%, vorzugsweise 20 bis 35 Gew.%, bezogen auf das Gewicht von (b), von Einheiten umfasst, die von dem alpha-Olefin abgeleitet sind,

wobei die Mengen der Komponenten (a) und (b) sich auf das Gesamtgewicht von (a)+(b) beziehen;
(B) 20 bis 85 Gew.% einer Polyethylenzusammensetzung, umfassend:

(i) 25 bis 85 Gew.% von einer Polyethylenkomponente mit einem durchschnittlichen Molekulargewicht (Gewichtsmittel) Mw(i), gemessen mittels Gelpermeationschromatographie, gleich oder höher als 1.000.000 g/mol;
(ii) 10 bis 65 Gew.% von einer Polyethylenkomponente mit einem durchschnittlichen Molekulargewicht (Gewichtsmittel) Mw(ii), gemessen mittels Gelpermeationschromatographie, gleich oder niedriger als 5000 g/mol;
wobei die Polyethylenzusammensetzung (B) mindestens 70 Gew.% (i)+(ii) umfasst, und die Mengen von (i) und (ii) sich auf das Gesamtgewicht der Polyethylenzusammensetzung (B) beziehen, wobei das Gesamtgewicht 100 % beträgt,

und wobei die Mengen der Komponenten (A) und (B) sich auf das Gesamtgewicht von (A)+(B) beziehen.

**2.** Polyolefinzusammensetzung (I) nach Anspruch 1, umfassend 40 bis 80 Gew.%, vorzugsweise 50 bis 70 Gew.% der heterophasischen Polymerzusammensetzung (A) und 20 bis 60 Gew.%, vorzugsweise 30 bis 50 Gew.% der Polyethylenzusammensetzung (B).

**3.** Polyolefinzusammensetzung (I) nach Anspruch 1 oder 2, wobei die Komponente (A) eine heterophasische Polymerzusammensetzung ist, welche umfasst:

(a) 35 bis 70 Gew.%, vorzugsweise 40 bis 65 Gew.% von mindestens einem Propylenpolymer ausgewählt aus

der Gruppe bestehend aus Propylenhomopolymeren, Propylencopolymeren mit Ethylen und/oder mindestens einem alpha-Olefin mit der Formel $CH_2=CHR^1$, wobei $R^1$ ein lineares oder verzweigtes $C_2$-$C_8$-Alkyl ist, das Copolymer bis zu und einschließlich 10,0 Gew.%, vorzugsweise 0,05 bis 8,0 Gew.%, bezogen auf das Gewicht von (a), von Einheiten umfasst, die von Ethylen und/oder dem alpha-Olefin abgeleitet sind;
(b) 15 bis 40 Gew.%, vorzugsweise 20 bis 35 Gew.% von mindestens einem Copolymer von Ethylen und mindestens einem alpha-Olefin mit der Formel $CH_2=CHR^1$, wobei $R^1$ ein lineares oder verzweigtes $C_2$-$C_8$-Alkyl ist, das Copolymer 10 bis 40 Gew.%, vorzugsweise 20 bis 35 Gew.%, bezogen auf das Gewicht von (b), von Einheiten umfasst, die von dem alpha-Olefin abgeleitet sind;
(c) 5 bis 30 Gew.%, vorzugsweise 7 bis 20 Gew.% von mindestens einem Copolymer von Propylen mit Ethylen und/oder mindestens einem alpha-Olefin mit der Formel $CH_2=CHR^1$, wobei $R^1$ ein lineares oder verzweigtes $C_2$-$C_8$-Alkyl ist, sowie Mischungen davon, wobei das Propylencopolymer bis zu und einschließlich 50 Gew.%, vorzugsweise 15 bis 50 Gew.%, bezogen auf das Gewicht von (c), von Einheiten umfasst, die von Ethylen und/oder dem alpha-Olefin abgeleitet sind;

wobei die Mengen der Komponenten (a), (b) und (c) sich auf das Gesamtgewicht von (a)+(b)+(c) beziehen.

**4.** Polyolefinzusammensetzung (I) nach einem der Ansprüche 1 bis 3, wobei mindestens ein alpha-Olefin, das in der heterophasischen Polymerzusammensetzung (A) enthalten ist, ausgewählt ist aus der Gruppe bestehend aus Buten-1, Hexen-1, 4-Methyl-1-penten, Octen-1 und Kombinationen davon, und vorzugsweise Buten-1 ist.

**5.** Polyolefinzusammensetzung (I) nach einem der Ansprüche 1 bis 4, wobei die Polyethylenzusammensetzung (B) umfasst:

(i) 25 bis 85 Gew.%, vorzugsweise 60 bis 75 Gew.% einer Polyethylenkomponente mit einem durchschnittlichen Molekulargewicht (Gewichtsmittel) Mw(i), gemessen mittels Gelpermeationschromatographie, gleich oder höher als 1.000.000 g/mol;
(ii) 10 bis 65 Gew.%, vorzugsweise 10 bis 20 Gew.% einer Polyethylenkomponente mit einem durchschnittlichen Molekulargewicht (Gewichtsmittel) Mw(ii), gemessen mittels Gelpermeationschromatographie, gleich oder niedriger als 5000 g/mol;
(iii) bis zu und einschließlich 100 Gew.% einer Polyethylenkomponente, die sich von Komponente (i) und von Komponente (ii) unterscheidet,

wobei die Polyethylenzusammensetzung (B) mindestens 70 Gew.%, vorzugsweise mindestens 75 Gew.%, bevorzugter mindestens 80 Gew.% von (i)+(ii) umfasst, und die Mengen der Komponenten (i) und (ii) sich auf das Gesamtgewicht der Polyethylenzusammensetzung (B) beziehen, wobei das Gesamtgewicht 100 % beträgt.

**6.** Polyolefinzusammensetzung (I) nach einem der Ansprüche 1 bis 5, wobei die Polyethylenkomponenten, die in der Polyethylenzusammensetzung (B) enthalten sind, Ethylenhomopolymere sind.

**7.** Polyolefinzusammensetzung (I) nach einem der Ansprüche 1 bis 6, wobei die Polyethylenzusammensetzung (B) einen Wert von Mw/Mn(B) gleich oder größer als 300, vorzugsweise im Bereich von 300 bis 1500 aufweist, und die Polyethylenkomponenten (i) und (ii) ein Mw/Mn aufweisen, das unabhängig ausgewählt ist aus Werten bis zu und einschließlich 5, vorzugsweise 1,2 bis 5, bevorzugter 1,5 bis 4,5, wobei Mw das durchschnittliche Molekulargewicht (Gewichtsmittel) ist, und Mn das durchschnittliche Molekulargewicht (Zahlenmittel) ist, gemessen mittels GPC.

**8.** Polyolefinzusammensetzung (I) nach einem der Ansprüche 1 bis 7, wobei die Polyethylenzusammensetzung (B) eine Schmelzflussrate MFR(B), gemessen bei 190 °C unter einer Last von 2,16 Kg gemäß ISO 1133-2:2011, von bis zu und einschließlich 10 g/10 min., vorzugsweise im Bereich von 0,00001 bis 10 g/10 min aufweist.

**9.** Polyolefinzusammensetzung (I) nach einem der Ansprüche 1 bis 8, des Weiteren umfassend bis zu und einschließlich 40 Gew.%, vorzugsweise 0,5 bis 30 Gew.%, bevorzugter 1 bis 20 Gew.% von einer Komponente (C), die ausgewählt ist aus der Gruppe bestehend aus:

(C1) Verstärkungsmitteln;
(C2) gesättigten oder ungesättigten Styrol- oder alpha-Methylstyrol-Blockcopolymeren, die vorzugsweise bis zu und einschließlich 30 Gew.%, bevorzugter 10 Gew.% bis 30 Gew.% Polystyrol umfassen, bezogen auf das Gewicht von (d1);
(C3) Polyolefinen, die mit einer Verbindung ausgewählt aus der Gruppe bestehend aus Maleinsäureanhydrid,

linearen oder verzweigten $C_1$-$C_{10}$-Dialkylmaleaten, linearen oder verzweigten $C_1$-$C_{10}$-Dialkylfumaraten, Itaconsäureanhydrid, linearen oder verzweigten $C_1$-$C_{10}$-Dialkylestern von Itaconsäure, Maleinsäure, Fumarsäure, Itaconsäure funktionalisiert sind;
(C4) einem Additiv ausgewählt aus der Gruppe bestehend aus Pigmenten, Farbstoffen, Streckölen, Flammschutzmitteln, UV-Resistenzmitteln, UV-Stabilisatoren, Schmiermitteln, Antiblockiermitteln, Gleitmitteln, Wachsen;
(C5) Kombinationen davon,

wobei die Menge der Komponente (C) sich auf das Gesamtgewicht von (A)+(B)+(C) bezieht.

**10.** Verfahren zur Fertigung eines Formartikels, umfassend einen Schritt, in dem ein Fluss der geschmolzenen Polyolefinzusammensetzung (I), wie in einem der Ansprüche 1 bis 9 definiert, einer Scherrate gleich oder größer als 50 $s^{-1}$, vorzugsweise gleich oder größer als 150 $s^{-1}$ ausgesetzt wird.

**11.** Verfahren nach Anspruch 10, wobei der Schritt, in dem ein Fluss der geschmolzenen Polyolefinzusammensetzung (I), wie in einem der Ansprüche 1 bis 9 definiert, einer Scherrate gleich oder größer als 50 $s^{-1}$ ausgesetzt wird, durch Spritzgießen oder durch Verfahren auf Extrusionsbasis durchgeführt wird.

**12.** Verfahren nach Anspruch 10 oder 11, wobei der Schritt, in dem ein Fluss der geschmolzenen Polyolefinzusammensetzung (I), wie in einem der Ansprüche 1 bis 9 definiert, einer Scherrate gleich oder größer als 50 $s^{-1}$ ausgesetzt wird, durch Spritzgießen durchgeführt wird, und die Scherrate im Bereich von 50 bis 3000 $s^{-1}$, vorzugsweise 200 bis 2000 $s^{-1}$ liegt.

**13.** Verfahren nach Anspruch 10 oder 11, wobei der Schritt, in dem ein Fluss der geschmolzenen Polyolefinzusammensetzung (I), wie in einem der Ansprüche 1 bis 9 definiert, einer Scherrate gleich oder größer als 50 $s^{-1}$ ausgesetzt wird, durch 3D-Druck auf Extrusionsbasis durchgeführt wird, und die Scherrate im Bereich von 50 bis 1000 $s^{-1}$, vorzugsweise 100 bis 600 $s^{-1}$ liegt, und gegebenenfalls, jedoch bevorzugt, die Formänderungsrate im Bereich von 3 bis 50 $s^{-1}$, vorzugsweise von 3 bis 20 $s^{-1}$ liegt.

**14.** Artikel, der nach dem Verfahren, wie in einem der Ansprüche 10 bis 13 definiert, erhalten wird.

**15.** Filament für additive Fertigung auf Extrusionsbasis, umfassend die Polyolefinzusammensetzung (I), wie in einem der Ansprüche 1 bis 9 beschrieben.

**16.** Verwendung einer Polyethylenzusammensetzung (B), umfassend:

(i) 25 bis 85 Gew.% von einer Polyethylenkomponente mit einem durchschnittlichen Molekulargewicht (Gewichtsmittel) Mw(i), gemessen mittels Gelpermeationschromatographie, gleich oder höher als 1.000.000 g/mol;
(ii) 10 bis 65 Gew.% von einer Polyethylenkomponente mit einem durchschnittlichen Molekulargewicht (Gewichtsmittel) Mw(ii), gemessen mittels Gelpermeationschromatographie, gleich oder niedriger als 5000 g/mol;
wobei die Polyethylenzusammensetzung (B) mindestens 70 Gew.% (i)+(ii) umfasst, und die Mengen von (i) und (ii) sich auf das Gesamtgewicht der Polyethylenzusammensetzung (B) beziehen, wobei das Gesamtgewicht 100 % beträgt,

als Verstärkungs-Masterbatch für eine heterophasische Polymerzusammensetzung (A), umfassend:

(a) 50 bis 80 Gew.% von mindestens einem Propylenpolymer ausgewählt aus der Gruppe bestehend aus Propylenhomopolymeren, Propylencopolymeren mit Ethylen und/oder mindestens einem alpha-Olefin mit der Formel $CH_2=CHR^1$, wobei $R^1$ ein lineares oder verzweigtes $C_2$-$C_8$-Alkyl ist, das Copolymer bis zu und einschließlich 10,0 Gew.%, vorzugsweise 0,05 bis 8,0 Gew.%, bezogen auf das Gewicht von (a), von Einheiten umfasst, die von Ethylen und/oder dem alpha-Olefin abgeleitet sind, sowie Mischungen davon;
(b) 20 bis 50 Gew.% von mindestens einem Copolymer von Ethylen und mindestens einem alpha-Olefin mit der Formel $CH_2=CHR^1$, wobei $R^1$ ein lineares oder verzweigtes $C_2$-$C_8$-Alkyl ist, das Copolymer 10 bis 40 Gew.%, vorzugsweise 20 bis 35 Gew.%, bezogen auf das Gewicht von (b), von Einheiten umfasst, die von dem alpha-Olefin abgeleitet sind,
wobei die Mengen der Komponenten (a) und (b) sich auf das Gesamtgewicht von (a)+(b) beziehen.

## Revendications

1. Composition polyoléfinique (I) comprenant :

    (A) 15 à 80 % en poids d'une composition polymère hétérophasique comprenant :

        (a) 50 à 80 % en poids d'au moins un polymère de propylène choisi dans le groupe constitué par les homopolymères de propylène, les copolymères de propylène avec de l'éthylène et/ou au moins une alpha-oléfine de formule $CH_2=CHR^1$, où $R^1$ représente alkyle en C2-C8 linéaire ou ramifié, le copolymère comprenant jusqu'à et y compris 10,0 % en poids, de préférence 0,05 à 8,0 % en poids, sur la base du poids de (a), de motifs dérivés de l'éthylène et/ou de l'alpha-oléfine et leurs mélanges ;
        (b) 20 à 50 % en poids d'au moins un copolymère d'éthylène et d'au moins une alpha-oléfine de formule $CH_2=CHR^1$, où $R^1$ représente alkyle en C2-C8 linéaire ou ramifié, le copolymère comprenant 10 à 40 % en poids, de préférence 20 à 35 % en poids, sur la base du poids de (b), de motifs dérivés de l'alpha-oléfine,

    les quantités des constituants (a) et (b) étant basées sur le poids total de (a)+(b) ;
    (B) 20 à 85 % en poids d'une composition de polyéthylène comprenant :

        (i) 25 à 85 % en poids d'un constituant polyéthylène présentant un poids moléculaire moyen en poids Mw(i), mesuré par chromatographie par perméation de gel, supérieur ou égal à 1.000.000 g/mole ;
        (ii) 10 à 65 % en poids d'un constituant polyéthylène présentant un poids moléculaire moyen en poids Mw(ii), mesuré par chromatographie par perméation de gel, inférieur ou égal à 5000 g/mole,
        la composition de polyéthylène (B) comprenant au moins 70 % en poids de (i)+(ii) et les quantités de (i) et (ii) étant basées sur le poids total de la composition de polyéthylène (B), le poids total valant 100 %,

    et les quantités des constituants (A) et (B) étant basées sur le poids total de (A)+(B).

2. Composition polyoléfinique (I) selon la revendication 1, comprenant 40 à 80 % en poids, de préférence 50 à 70 % en poids, de la composition polymère hétérophasique (A) et 20 à 60 % en poids, de préférence 30 à 50 % en poids, de la composition de polyéthylène (B).

3. Composition polyoléfinique (I) selon la revendication 1 ou 2, le constituant (A) étant une composition polymère hétérophasique comprenant :

    (a) 35 à 70 % en poids, de préférence 40 à 65 % en poids, d'au moins un polymère de propylène choisi dans le groupe constitué par les homopolymères de propylène, les copolymères de propylène avec de l'éthylène et/ou au moins une alpha-oléfine de formule $CH_2=CHR^1$, où $R^1$ représente alkyle en C2-C8 linéaire ou ramifié, le copolymère comprenant jusqu'à et y compris 10,0 % en poids, de préférence 0,05 à 8,0 % en poids, sur la base du poids de (a), de motifs dérivés de l'éthylène et/ou de l'alpha-oléfine ;
    (b) 15 à 40 % en poids, de préférence 20 à 35 % en poids, d'au moins un copolymère d'éthylène et d'au moins une alpha-oléfine de formule $CH_2=CHR^1$, où $R^1$ représente alkyle en C2-C8 linéaire ou ramifié, le copolymère comprenant 10 à 40 % en poids, de préférence 20 à 35 % en poids, sur la base du poids de (b), de motifs dérivés de l'alpha-oléfine ;
    (c) 5 à 30 % en poids, de préférence 7 à 20 % en poids, d'au moins un copolymère de propylène avec de l'éthylène et/ou au moins une alpha-oléfine de formule $CH_2=CHR^1$, où $R^1$ représente alkyle en C2-C8 linéaire ou ramifié et leurs mélanges, le copolymère de propylène comprenant jusqu'à et y compris 50 % en poids, de préférence 15 à 50 % en poids, sur la base du poids de (c), de motifs dérivés de l'éthylène et/ou de l'alpha-oléfine ;

    les quantités des constituants (a), (b) et (c) étant basées sur le poids total de (a)+(b)+(c).

4. Composition polyoléfinique (I) selon l'une quelconque des revendications 1 à 3, au moins une alpha-oléfine comprise dans la composition polymère hétérophasique (A) étant choisie dans le groupe constitué par le butène-1, l'hexène-1, le 4-méthyl-1-pentène, l'octène-1 et leurs combinaisons, de préférence le butène-1.

5. Composition polyoléfinique (I) selon l'une quelconque des revendications 1 à 4, la composition de polyéthylène (B) comprenant :

    (i) 25 à 85 % en poids, de préférence 60 à 75 % en poids, d'un constituant polyéthylène présentant un poids

moléculaire moyen en poids Mw(i), mesuré par chromatographie par perméation de gel, supérieur ou égal à 1.000.000 g/mole ;
(ii) 10 à 65 % en poids, de préférence 10 à 20 % en poids, d'un constituant polyéthylène présentant un poids moléculaire moyen en poids Mw(ii), mesuré par chromatographie par perméation de gel, inférieur ou égal à 5000 g/mole,
(iii) jusqu'à et y compris 100 % en poids d'un constituant polyéthylène différent du constituant (i) et du constituant (ii),

la composition de polyéthylène (B) comprenant au moins 70 % en poids, de préférence au moins 75 % en poids, plus préférablement au moins 80 % en poids, de (i)+(ii) et les quantités des constituants (i) et (ii) étant basées sur le poids total de la composition de polyéthylène (B), le poids total valant 100 %.

**6.** Composition polyoléfinique (I) selon l'une quelconque des revendications 1 à 5, les constituants de polyéthylène compris dans la composition de polyéthylène (B) étant des homopolymères d'éthylène.

**7.** Composition polyoléfinique (I) selon l'une quelconque des revendications 1 à 6, la composition de polyéthylène (B) présentant une valeur Mw/Mn(B) supérieure ou égale à 300, de préférence située dans la plage de 300 à 1500 et les constituants de polyéthylène (i) et (ii) présentant un Mw/Mn indépendamment choisi parmi des valeurs de jusqu'à et y compris 5, de préférence de 1,2 à 5, plus préférablement de 1,5 à 4,5, Mw étant le poids moléculaire moyen en poids et Mn étant le poids moléculaire moyen en nombre mesuré par CPG.

**8.** Composition polyoléfinique (I) selon l'une quelconque des revendications 1 à 7, la composition de polyéthylène (B) présentant un indice de fluidité à chaud MFR(B), mesuré à 190 °C sous une charge de 2,16 Kg selon la norme ISO 1133-2:2011, de jusqu'à et y compris 10 g/10 min, de préférence situé dans la plage de 0,00001 à 10 g/10 min.

**9.** Composition polyoléfinique (I) selon l'une quelconque des revendications 1 à 8, comprenant en outre jusqu'à et y compris 40 % en poids, de préférence 0,5 à 30 % en poids, plus préférablement 1 à 20 %, d'un constituant (C) choisi dans le groupe constitué par :

(C1) les agents de renforcement ;
(C2) les copolymères séquencés, saturés ou insaturés, de styrène ou d'alpha-méthylstyrène comprenant de préférence jusqu'à et y compris 30 % en poids de polystyrène, plus préférablement 10 % à 30 % en poids, sur la base du poids de (d1) ;
(C3) les polyoléfines fonctionnalisées par un composé choisi dans le groupe constitué par l'anhydride maléique, les maléates de dialkyle linéaire ou ramifié en C1-C10, les fumarates de dialkyle linéaire ou ramifié en C1-C10, l'anhydride itaconique, les esters de dialkyle linéaire ou ramifié en C1-C10 de l'acide itaconique, l'acide maléique, l'acide fumarique, l'acide itaconique ;
(C4) un additif choisi dans le groupe constitué par les pigments, les colorants, les huiles d'extension, les agents ignifuges, les agents de résistance aux UV, les stabilisants aux UV, les lubrifiants, les agents antiadhérents, les agents de glissement, les cires ;
(C5) leurs combinaisons,

la quantité de constituant (C) étant basée sur le poids total de (A)+(B)+(C).

**10.** Procédé de fabrication d'un article façonné comprenant une étape de soumission d'un flux de la composition polyoléfinique (I) fondue telle que définie dans l'une quelconque des revendications 1 à 9 à un taux de cisaillement supérieur ou égal à 50 $s^{-1}$, de préférence supérieur ou égal à 150 $s^{-1}$.

**11.** Procédé selon la revendication 10, l'étape de soumission d'un flux de la composition polyoléfinique (I) fondue telle que définie dans l'une quelconque des revendications 1 à 9 à un taux de cisaillement supérieur ou égal à 50 $s^{-1}$ étant effectuée par moulage par injection ou par un procédé basé sur l'extrusion.

**12.** Procédé selon la revendication 10 ou 11, l'étape de soumission d'un flux de la composition polyoléfinique (I) fondue telle que définie dans l'une quelconque des revendications 1 à 9 à un taux de cisaillement supérieur ou égal à 50 $s^{-1}$ étant effectuée par moulage par injection et le taux de cisaillement étant situé dans la plage de 50 à 3000 $s^{-1}$, de préférence de 200 à 2000 $s^{-1}$.

**13.** Procédé selon la revendication 10 ou 11, l'étape de soumission d'un flux de la composition polyoléfinique (I) fondue

telle que définie dans l'une quelconque des revendications 1 à 9 à un taux de cisaillement supérieur ou égal à 50 $s^{-1}$ étant effectuée par impression 3D basé sur l'extrusion et le taux de cisaillement étant situé dans la plage de 50 à 1000 $s^{-1}$, de préférence de 100 à 600 $s^{-1}$ et éventuellement mais de préférence le taux de déformation étant situé dans la plage de 3 à 50 $s^{-1}$, de préférence de 3 à 20 $s^{-1}$.

**14.** Article obtenu par le procédé tel que défini dans l'une quelconque des revendications 10 à 13.

**15.** Filament pour la fabrication additive basée sur l'extrusion comprenant la composition polyoléfinique (I) telle que décrite dans l'une quelconque des revendications 1 à 9.

**16.** Utilisation d'une composition de polyéthylène (B) comprenant :

(i) 25 à 85 % en poids d'un constituant polyéthylène présentant un poids moléculaire moyen en poids Mw(i), mesuré par chromatographie par perméation de gel, supérieur ou égal à 1.000.000 g/mole ;
(ii) 10 à 65 % en poids d'un constituant polyéthylène présentant un poids moléculaire moyen en poids Mw(ii), mesuré par chromatographie par perméation de gel, inférieur ou égal à 5000 g/mole,
la composition de polyéthylène (B) comprenant au moins 70 % en poids de (i)+(ii) et les quantités de (i) et (ii) étant basées sur le poids total de la composition de polyéthylène (B), le poids total valant 100 %,

en tant que mélange maître de renforcement pour une composition polymère hétérophasique (A) comprenant :

(a) 50 à 80 % en poids d'au moins un polymère de propylène choisi dans le groupe constitué par les homopolymères de propylène, les copolymères de propylène avec de l'éthylène et/ou au moins une alpha-oléfine de formule $CH_2=CHR^1$, où $R^1$ représente alkyle en C2-C8 linéaire ou ramifié, le copolymère comprenant jusqu'à et y compris 10,0 % en poids, de préférence 0,05 à 8,0 % en poids, sur la base du poids de (a), de motifs dérivés de l'éthylène et/ou de l'alpha-oléfine et leurs mélanges ;
(b) 20 à 50 % en poids d'au moins un copolymère d'éthylène et d'au moins une alpha-oléfine de formule $CH_2=CHR^1$, où $R^1$ représente alkyle en C2-C8 linéaire ou ramifié, le copolymère comprenant 10 à 40 % en poids, de préférence 20 à 35 % en poids, sur la base du poids de (b), de motifs dérivés de l'alpha-oléfine,
les quantités des constituants (a) et (b) étant basées sur le poids total de (a)+(b).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140066574 A1
- WO 2020169423 A1
- WO 2021069242 A1
- WO 03076511 A1
- US 2013253125 A1
- EP 45977 A2
- EP 395083 A2
- WO 98056830 A
- WO 98056833 A
- WO 98056834 A
- WO 0055215 A
- WO 0063261 A
- WO 2010078494 A
- US 7388061 B
- EP 361493 A
- EP 728769 A
- WO 02100904 A
- WO 0757160 A
- WO 2011061134 A
- US 4399054 A
- US 4469648 A
- WO 9844009 A1
- EP 1012195 A
- WO 03051984 A
- WO 03076511 A
- WO 01021668 A
- WO 2011089017 A
- EP 1188762 A
- WO 2005103096 A
- WO 9704015 A
- EP 0572028 A1
- WO 2005014715 A

### Non-patent literature cited in the description


- **TIMO HEES et al.** *Polymer*, 29 August 2018, vol. 151, 47-55
- **X. WANG et al.** *Journal of Polymer Science*, 2006, vol. 100, 3495-3509
- **T. HEES et al.** *ACS Applied Polymer Materials*, 2021, vol. 3, 3455-3464
- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. *Macromolecules*, 1982, vol. 15 (4), 1150-1152
- **GRUBISIC Z.** ; **REMPP P** ; **BENOIT H.** *J. Polymer Sci.*, 1967, vol. 5, 753
- **ESTERUELAS MA et al.** *Organometallics*, 2003, vol. 22 (3), 395-406
- **ENDERS et al.** *Organometallics*, 2004, vol. 23 (16), 3832-9
- **FERNÁNDEZ et al.** *Organometallics*, 2007, vol. 26 (18), 4402-12